# EUROPEAN PATENT APPLICATION

(11) **EP 4 429 158 A1**
(43) Date of publication of application: **11.09.2024**
(21) Application number: 22900379.3
(22) Date of filing: 25.11.2022
(51) Int. Cl.: H04L 5/00, H04W 28/12

(54) **TRANSMISSION INSTRUCTION METHOD AND COMMUNICATION APPARATUS**

(30) Priority: 02.12.2021 CN 202111460771
(71) Applicant: Huawei Technologies Co., Ltd., Shenzhen, Guangdong 518129 (CN)
(72) Inventor: LI, Shengyu, Shenzhen, Guangdong 518129 (CN); GUAN, Lei, Shenzhen, Guangdong 518129 (CN); DING, Yang, Shenzhen, Guangdong 518129 (CN)
(74) Representative: Gill Jennings & Every LLP
(86) International application number: PCT/CN2022/134214
(87) International publication number: WO 2023/098574

(57) **Abstract**

This application provides a transmission indication method and a communication apparatus. The method includes: A terminal device receives a medium access control-control element MAC CE or downlink control information DCI. The terminal device does not receive any downlink transmission in one time window based on indication information in the MAC CE or the DCI. According to the solution provided in this application, discontinuous reception DRX transmission can be dynamically and flexibly configured for the terminal device. This helps reduce a performance loss of the terminal device.

## Description

This application claims priority to Chinese Patent Application No. 202111460771.5, filed with the China National Intellectual Property Administration on December 2, 2021 and entitled "TRANSMISSION INDICATION METHOD AND COMMUNICATION APPARATUS", which is incorporated herein by reference in its entirety.

### TECHNICAL FIELD

This application relates to the field of communication technologies, and in particular, to a transmission indication method and a communication apparatus.

### BACKGROUND

With development of cellular communication technologies, power consumption of a network device (for example, a base station) is increasingly high. For example, with development from a 4th generation (4th Generation, 4G) communication technology to a 5th generation (5th Generation, 5G) communication technology, a spectrum used by the network device is increasingly wide, a quantity of configured transmit antennas is increasingly large, and the power consumption of the network device (for example, the base station) is increased by two to three times. In addition, the power consumption of the network device may not be in direct proportion to a service load. For example, power consumption of the network device in a plurality of transmission time intervals (transmission time intervals, TTIs) includes load-related dynamic power consumption and load-independent static power consumption. In this case, the power consumption of the network device is not in direct proportion to the service load.

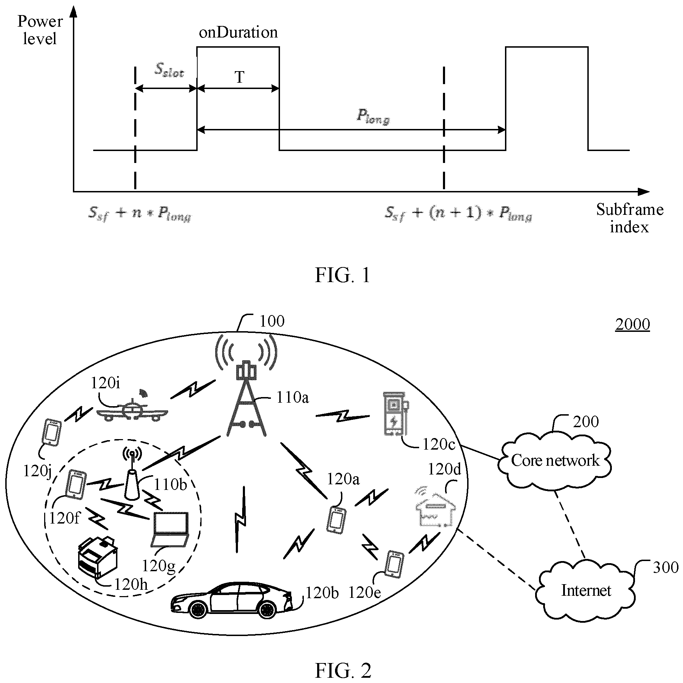

A new radio (new radio, NR) protocol supports configuration of discontinuous reception (discontinuous reception, DRX) transmission for a terminal device, so that the terminal device receives some channels and reference signals only in a specified time period. DRX configured by the network device for the terminal device is periodic. For example, as shown in FIG. 1, the network device may configure a time window parameter of a long DRX cycle for the terminal device. The time window parameter includes a length *P_{long}* (also referred to as a DRX period) of each time window, a start subframe offset *S_{sf},* a start slot offset *Sₛₗₒₜ* of an onDuration state in a start subframe, and a duration T of the onDuration state. The terminal device enters an active state at a start moment of a start slot of an onDuration state in each time window, and the terminal device switches to an inactive state when the onDuration state ends. The terminal device monitors, only in the active state, most downlink control channels (physical downlink control channels, PDCCHs) for scheduling data, to receive and send data based on an indication of the PDCCH. For the configuration of the DRX transmission for the terminal device, because the DRX cycle is usually long, and a delay of performing DRX configuration and reconfiguration is also high, this DRX transmission solution of the terminal device is applicable to semi-persistent data transmission at a large time granularity. This usually causes a large performance loss, for example, a terminal device perceived rate loss.

Therefore, how to ensure communication performance and reduce power consumption of the network device and the terminal device is an urgent problem to be resolved.

### SUMMARY

Embodiments of this application provide a transmission indication method and a communication apparatus, to dynamically and flexibly configure DRX transmission. This helps reduce a performance loss of a terminal device and reduce power consumption of a network device and the terminal device.

According to a first aspect, this application provides a transmission indication method. The method includes: A terminal device receives first indication information, where the first indication information indicates the terminal device not to receive first downlink transmission in a first time window, and the first indication information is carried in a first medium access control-control element (medium access control-control element, MAC CE) or first downlink control information (downlink control information, DCI). The terminal device skips receiving the first downlink transmission in the first time window based on the first indication information. According to the method described in the first aspect, the terminal device can dynamically determine, based on the first indication information in the MAC CE or the DCI, whether to receive downlink transmission in the first time window. This helps reduce a performance loss of the terminal device and reduce power consumption of a network device and the terminal device.

In a possible implementation, the first MAC CE or the first DCI is carried on a multicast or broadcast physical downlink channel. Because the multicast or broadcast physical downlink channel is sent to a group of terminal devices and is not user-specific (UE-specific), the first indication information is sent to the terminal devices through the multicast or broadcast physical downlink channel. This avoids a problem of high signaling overheads caused because the network device separately sends the first indication information to each terminal device, and reduces signaling overheads of the network device.

In a possible implementation, a start moment of the first time window is determined based on a transmission moment *T*₁ of a first physical downlink channel, and the first physical downlink channel is a physical downlink channel carrying the first MAC CE or the first DCI.

In a possible implementation, a start moment of the first time window is determined based on a transmission moment *T*₁ of a first physical downlink channel and a first time length Δ*T*1, the first physical downlink channel is a physical downlink channel carrying the first MAC CE or the first DCI, and the first time length Δ*T*1 is preset or is indicated by the first indication information. After receiving the first physical downlink channel, the terminal device needs specific time to obtain the first indication information through decoding. The start moment of the first time window is determined based on the transmission moment *T*₁ of the first physical downlink channel and the first time length Δ*T*1, so that it is ensured that the start moment of the first time window is after a moment at which the terminal device parses out the first indication information. This avoids a problem of a communication exception caused because the terminal device does not determine, before parsing out the first indication information, whether downlink reception needs to be performed.

In a possible implementation, the start moment of the first time window is a start moment of a first time unit, the first time unit is an earliest time unit whose start moment is not earlier than a moment *T*₂, and the moment *T*₂ = *T*₁ + Δ*T*1. Optionally, the time unit may be a symbol, a sub-slot, a slot, a subframe, or the like. According to the possible implementation, it is ensured that the first time window starts from a start moment of one time unit. This conforms to a feature that the network device and the terminal device perform transmission in a unit of time unit, and can reduce implementation complexity.

In a possible implementation, the first time length Δ*T*1 is greater than or equal to a first threshold, and the first threshold is a shortest processing duration supported by the terminal device for the first physical downlink channel. According to the possible implementation, it is ensured that the determined start moment of the first time window is after the moment at which the terminal device parses out the first indication information. This avoids a case in which the terminal device does not determine, before parsing out the first indication information, whether the downlink reception needs to be performed.

In a possible implementation, the first threshold may be pre-specified in a protocol. In other words, the shortest processing duration supported by the terminal device for the first physical downlink channel is pre-specified in the protocol. For ease of description, the shortest processing duration supported by the terminal device for the first physical downlink channel is referred to as the shortest processing duration for short below.

In a possible implementation, the first physical downlink channel is a first physical downlink shared channel (physical downlink shared channel, PDSCH). The shortest processing duration is a shortest processing duration *T*_{*proc*,1} from time when the terminal device receives the first PDSCH to time when the terminal device sends a hybrid automatic repeat request-acknowledgment (hybrid automatic repeat request-acknowledgment, HARQ-ACK) corresponding to the first PDSCH; or the shortest processing duration is a shortest processing duration *T̃*_{*proc,*1} needed from time when the terminal device receives the first PDSCH to time when the terminal device completes decoding on the first PDSCH.

In a possible implementation, the first physical downlink channel is a first PDCCH. The shortest processing duration is a shortest processing duration *T*_{*proc,*2} from time when the terminal device receives the first PDCCH to time when the terminal device sends a physical uplink shared channel (physical uplink shared channel, PUSCH) scheduled by the first PDCCH; or the shortest processing duration is a shortest processing duration *T*_{*proc,*2} needed from time when the terminal device receives the first PDCCH to time when the terminal device completes decoding on the first PDCCH.

In a possible implementation, that the shortest processing duration includes N shortest processing durations in different cases is pre-specified in the protocol, where N is greater than 1, and the first threshold is a largest value in the foregoing *N* shortest processing durations; or the first threshold is an *n*^{th} value in the foregoing *N* shortest processing durations, where 1 ≤ n ≤ *N,* and *n* is pre-indicated by the network device.

In a possible implementation, the start moment of the first time window is a start moment of a second time unit, and the second time unit is an earliest time unit whose start moment is not earlier than a transmission moment *T*₁ of the first physical downlink channel. According to the possible implementation, it is ensured that the first time window starts from a start moment of one time unit. This conforms to a feature that the network device and the terminal device perform transmission in a unit of time unit, and can reduce implementation complexity.

In a possible implementation, the transmission moment *T*₁ of the first physical downlink channel is a transmission start moment or a transmission end moment of the first physical downlink channel.

In a possible implementation, a duration of the first time window is preset. The preset duration of the first time window helps reduce indication overheads of the duration of the first time window.

In a possible implementation, a duration of the first time window is indicated by the first indication information. The duration of the first time window is indicated by the first indication information, so that the duration of the first time window can be dynamically changed, and the duration of the first time window can be more flexible.

In a possible implementation, the first downlink transmission includes any one or more of the following: a PDCCH, a dynamic scheduling PDSCH, a semi-persistent scheduling physical downlink shared channel (semi-persistent scheduling PDSCH, SPS PDSCH), a channel state information reference signal (channel state information reference signal, CSI-RS), or a synchronization signal/physical broadcast channel block (synchronization signal/PBCH, SSB). For example, the first downlink transmission includes the PDCCH, the dynamic scheduling PDSCH, the SPS PDSCH, the CSI-RS, and the SSB. In this way, the power consumption of the network device and the terminal device can be reduced to a greater extent.

In another possible implementation, the first downlink transmission includes: a PDCCH, a dynamically configured PDSCH, an SPS PDSCH, and a CSI-RS, and the first downlink transmission does not include an SSB. For SSB transmission, a terminal device in a connected state needs to perform reception, and a terminal device in an idle state or an inactive state also needs to perform reception. However, the terminal device in the idle state or the inactive state may not successfully receive the first indication information. Therefore, reserving the SSB transmission in the first time window helps maintain SSB reception and measurement of the terminal device in the idle state or the inactive state, to avoid a measurement error caused because the network device does not send the SSB but the terminal device in the idle state or the inactive state attempts to detect the SSB, thereby avoiding an unnecessary operation such as cell reselection. In addition, SSB sending has a long periodicity and a small time domain proportion. Sending the SSB by the network device in the first time window does not cause large power consumption of the network device.

In still another possible implementation, the first downlink transmission does not include an SSB and a PDCCH scrambled by a paging radio network temporary identifier (paging radio network temporary identifier, P-RNTI). The PDCCH scrambled by the P-RNTI is used to schedule a paging indication of the terminal device, and a position at which each terminal device receives a PDCCH scrambled by a corresponding P-RNTI is preconfigured. For a terminal device, if the network device skips one transmission occasion of the PDCCH scrambled by the P-RNTI, the terminal device needs to wait for a next pre-configuration occasion. A waiting delay is high. Therefore, reserving, in the first time window, transmission of the PDCCH scrambled by the P-RNTI helps maintain paging reception of the terminal device.

In a possible implementation, when the first downlink transmission includes the PDCCH, the PDCCH includes one or more of the following: a PDCCH scrambled by a cell radio network temporary identifier (cell access RNTI, C-RNTI), a PDCCH scrambled by a configured scheduling radio network temporary identifier (configured scheduling RNTI, CS-RNTI), a PDCCH scrambled by a slot format indication radio network temporary identifier (slot format indication RNTI, SFI-RNTI), a PDCCH scrambled by an interrupted transmission indication radio network temporary identifier (interrupted transmission indication RNTI, INT-RNTI), a PDCCH scrambled by a cancellation indication radio network temporary identifier (cancellation indication RNTI, CI-RNTI), a PDCCH scrambled by a transmit power control-physical uplink control channel-radio network temporary identifier (transmit power control-PUCCH-RNTI, TPC-PUCCH-RNTI), a PDCCH scrambled by a transmit power control-physical uplink shared channel-radio network temporary identifier (transmit power control-PUSCH-RNTI, TPC-PUSCH-RNTI), a PDCCH scrambled by a transmit power control-sounding reference signal-radio network temporary identifier (transmit power control-SRS-RNTI, TPC-SRS-RNTI), a PDCCH scrambled by an availability indicator radio network temporary identifier (availability indicator RNTI, AI-RNTI), a PDCCH scrambled by a system information radio network temporary identifier (system information RNTI, SI-RNTI), a PDCCH scrambled by a random access radio network temporary identifier (random access RNTI, RA-RNTI), a PDCCH scrambled by a temporary cell radio network temporary identifier (temporary cell access RNTI, TC-RNTI), or a PDCCH scrambled by a paging radio network temporary identifier (paging RNTI, P-RNTI). In other words, the terminal device does not perform, in the first time window, blind detection on the PDCCHs scrambled by the RNTIs.

In a possible implementation, the first indication information further indicates the terminal device not to send first uplink transmission in the first time window. Correspondingly, the terminal device may further not send the first uplink transmission in the first time window based on the first indication information. According to the possible implementation, the terminal device may dynamically shut down receiving of the first downlink transmission and sending of the first uplink transmission. This helps reduce the power consumption of the terminal device while the power consumption of the network device is reduced.

In a possible implementation, the first uplink transmission may include any one or more of the following: a grant-based physical uplink shared channel (grant-based physical downlink shared channel, GB PUSCH), a configured grant physical uplink shared channel (configured grant physical downlink shared channel, CG PUSCH), a physical uplink control channel (physical uplink control channel, PUCCH), a physical random access channel (physical random access channel, PRACH), or an uplink sounding reference signal (Sounding Reference Signal, SRS).

In a possible implementation, when the first uplink transmission includes the PUCCH, the PUCCH may include one or more of the following: a PUCCH carrying a HARQ-ACK of the dynamic scheduling PDSCH, a PUCCH carrying a HARQ-ACK of the SPS PDSCH, a PUCCH carrying CSI, or a PUCCH carrying a scheduling request (scheduling request, SR) or a beam failure recovery (beam failure recovery, BFR).

In a possible implementation, the first indication information indicates, in an explicit indication manner, the terminal device not to receive the first downlink transmission in the first time window, where a first status value of the first indication information indicates the terminal device not to receive the first downlink transmission in the first time window, and a second status value of the first indication information indicates the terminal device to receive the first downlink transmission in the first time window.

In a possible implementation, if the terminal device fails to decode the first physical downlink channel carrying the first MAC CE or the first DCI, the terminal device determines that a value of the first indication information is the second status value. According to the possible implementation, the terminal device does not miss downlink transmission.

In a possible implementation, if the terminal device fails to decode the first physical downlink channel carrying the first MAC CE or the first DCI, the terminal device determines that a value of the first indication information is the first status value. According to the possible implementation, the power consumption of the terminal device is reduced.

In a possible implementation, if the terminal device fails to decode the first physical downlink channel carrying the first MAC CE or the first DCI, the terminal device determines, based on radio resource control (radio resource control, RRC) signaling sent by the network device, that a value of the first indication information is the first status value or the second status value. According to the possible implementation, the value of the first indication information can be flexibly determined.

In a possible implementation, the first indication information indicates, in an implicit indication manner, the terminal device not to receive the first downlink transmission in the first time window, where "existence" of the first indication information indicates the terminal device not to receive the first downlink transmission in the first time window, and "no existence" of the first indication information indicates the terminal device to receive the first downlink transmission in the first time window.

In a possible implementation, if the terminal device fails to decode the first physical downlink channel carrying the first MAC CE or the first DCI, the terminal device determines that the first indication information does not exist. According to the possible implementation, the terminal device does not miss downlink transmission, and communication quality is ensured.

In a possible implementation, if the terminal device fails to decode the first physical downlink channel carrying the first MAC CE or the first DCI, the terminal device determines that the first indication information exists. According to the possible implementation, the power consumption of the terminal device is reduced.

In a possible implementation, if the terminal device fails to decode the first physical downlink channel carrying the first MAC CE or the first DCI, the terminal device determines, based on RRC signaling sent by the network device, whether the first indication information exists. According to the possible implementation, whether the first indication information exists can be flexibly determined.

In a possible implementation, if the terminal device fails to decode the first physical downlink channel carrying the first MAC CE or the first DCI, the terminal device receives the first downlink transmission in the first time window. According to the possible implementation, the terminal device does not miss downlink transmission.

In a possible implementation, if the terminal device fails to decode the first physical downlink channel carrying the first MAC CE or the first DCI, the terminal device does not receive the first downlink transmission in the first time window. According to the possible implementation, the power consumption of the terminal device is reduced.

In a possible implementation, if the terminal device fails to decode the first physical downlink channel carrying the first MAC CE or the first DCI, the terminal device determines, based on radio resource control RRC signaling sent by the network device, whether to receive the first downlink transmission in the first time window. According to the possible implementation, when the terminal device fails to decode the first physical downlink channel carrying the first MAC CE or the first DCI, the terminal device may flexibly determine whether to receive the first downlink transmission in the first time window.

In a possible implementation, the first indication information is carried in the first MAC CE, and the first MAC CE is carried on the SPS PDSCH. When the first indication information indicates not to perform the first downlink transmission in the first time window, and the first time window includes a next transmission occasion of the SPS PDSCH, the terminal device performs any one of the following operations:
(1) Skip receiving the SPS PDSCH on the next transmission occasion. This helps reduce the power consumption of the terminal device.
(2) The terminal device receives the SPS PDSCH on the next transmission occasion, and determines, based on the first indication information in the SPS PDSCH received on the next transmission occasion, whether to receive the first downlink transmission in a next first time window. This helps obtain maximum scheduling flexibility.
(3) The terminal device determines, based on the RRC signaling sent by the network device, whether to receive the SPS PDSCH on the next transmission occasion. In this way, whether to receive the SPS PDSCH in the first time window can be more flexibly determined.

In a possible implementation, the first indication information is carried in the first DCI. When the first indication information indicates not to receive the first downlink transmission in the first time window, and the first time window includes a next transmission occasion of the first DCI, the terminal device performs any one of the following operations:
(1) Skip receiving the first DCI on the next transmission occasion. This helps reduce the power consumption of the terminal device.
(2) The terminal device receives the first DCI on the next transmission occasion, and determines, based on the first indication information in the first DCI received on the next transmission occasion, whether to receive the first downlink transmission in a next first time window. This helps obtain maximum scheduling flexibility.
(3) The terminal device determines, based on the RRC signaling sent by the network device, whether to receive the first DCI on the next transmission occasion. In this way, whether to receive the first DCI in the first time window can be more flexibly determined.

According to a second aspect, this application provides a transmission indication method. The method includes: A network device sends first indication information to a terminal device, where the first indication information indicates the terminal device not to receive first downlink transmission in a first time window, and the first indication information is carried in first MAC CE signaling or first DCI signaling. The network device skips sending the first downlink transmission in the first time window.

In a possible implementation, the first MAC CE or the first DCI is carried on a multicast or broadcast physical downlink channel.

In a possible implementation, a start moment of the first time window is a start moment of a first time unit, the first time unit is an earliest time unit whose start moment is not earlier than a moment *T*₂, and the moment *T*₂ = *T*₁ + Δ*T*1, where *T*₁ is a transmission moment of a first physical downlink channel, Δ*T*1 is a first time length, the first physical downlink channel is a physical downlink channel carrying the first MAC CE or the first DCI, and the first time length Δ*T*1 is preset, or the first indication information further indicates the first time length Δ*T*1.

In a possible implementation, the first time length Δ*T*1 is greater than or equal to a first threshold, and the first threshold is a shortest processing duration that can be supported by the terminal device for the first physical downlink channel.

In a possible implementation, the first threshold may be pre-specified in a protocol. In other words, the shortest processing duration supported by the terminal device for the first physical downlink channel is pre-specified in the protocol. For ease of description, the shortest processing duration supported by the terminal device for the first physical downlink channel is referred to as the shortest processing duration for short below.

In a possible implementation, the first physical downlink channel is a first PDSCH. The shortest processing duration is a shortest processing duration *T*_{*proc*,1} from time when the terminal device receives the first PDSCH to time when the terminal device sends a HARQ-ACK corresponding to the first PDSCH; or the shortest processing duration is a shortest processing duration *T̃*_{*proc*,1} needed from time when the terminal device receives the first PDSCH to time when the terminal device completes decoding on the first PDSCH.

In a possible implementation, the first physical downlink channel is a first PDCCH. The shortest processing duration is a shortest processing duration *T*_{*proc,*2} from time when the terminal device receives the first PDCCH to time when the terminal device sends a PUSCH scheduled by the first PDCCH; or the shortest processing duration is a shortest processing duration *T̃*_{*proc,*2} needed from time when the terminal device receives the first PDCCH to time when the terminal device completes decoding on the first PDCCH.

In a possible implementation, that the shortest processing duration includes N shortest processing durations in different cases is pre-specified in the protocol, where N is greater than 1, and the first threshold is a largest value in the foregoing *N* shortest processing durations; or the first threshold is an *n*^{th} value in the foregoing *N* shortest processing durations, where 1 ≤ *n* ≤ *N,* and n is pre-indicated by the network device.

In a possible implementation, the start moment of the first time window is a start moment of a second time unit, and the second time unit is an earliest time unit whose start moment is not earlier than a transmission moment *T*₁ of the first physical downlink channel.

In a possible implementation, the transmission moment *T*₁ of the first physical downlink channel is a transmission start moment or a transmission end moment of the first physical downlink channel.

In a possible implementation, a duration of the first time window is preset, or the first indication information further indicates a duration of the first time window.

In a possible implementation, the first downlink transmission includes any one or more of the following: a PDCCH, a dynamic scheduling PDSCH, an SPS PDSCH, a CSI-RS, or an SSB.

In another possible implementation, the first downlink transmission includes: a PDCCH, a dynamic scheduling PDSCH, an SPS PDSCH, and a CSI-RS, and the first downlink transmission does not include an SSB.

In still another possible implementation, the first downlink transmission does not include an SSB and a PDCCH scrambled by a P-RNTI.

In a possible implementation, when the first downlink transmission includes the PDCCH, the PDCCH includes one or more of the following: a PDCCH scrambled by a C-RNTI, a PDCCH scrambled by a CS-RNTI, a PDCCH scrambled by an SFI-RNTI, a PDCCH scrambled by an INT-RNTI, a PDCCH scrambled by a CI-RNTI, a PDCCH scrambled by a TPC-PUCCH-RNTI, a PDCCH scrambled by a TPC-PUSCH-RNTI, a PDCCH scrambled by a TPC-SRS-RNTI, a PDCCH scrambled by anAI-RNTI, aPDCCH scrambled by an SI-RNTI, a PDCCH scrambled by an RA-RNTI, a PDCCH scrambled by a TC-RNTI, or a PDCCH scrambled by a P-RNTI. In other words, the terminal device does not perform, in the first time window, blind detection on the PDCCHs scrambled by the RNTIs.

In a possible implementation, the first indication information further indicates the terminal device not to send first uplink transmission in the first time window. Correspondingly, the network device does not receive the first uplink transmission in the first time window.

In a possible implementation, the first uplink transmission may include any one or more of the following: a GB PUSCH, a CG PUSCH, a PUCCH, a PRACH, or an SRS.

Optionally, when the first uplink transmission includes the PUCCH, the PUCCH may include one or more of the following: a PUCCH carrying a HARQ-ACK of the dynamic scheduling PDSCH, a PUCCH carrying a HARQ-ACK of the SPS PDSCH, a PUCCH carrying CSI, or a PUCCH carrying an SR or BFR.

In a possible implementation, a first status value of the first indication information indicates the terminal device not to receive the first downlink transmission in the first time window, and a second status value of the first indication information indicates the terminal device to receive the first downlink transmission in the first time window.

In another possible implementation, "existence" of the first indication information indicates the terminal device not to receive the first downlink transmission in the first time window, and "no existence" of the first indication information indicates the terminal device to receive the first downlink transmission in the first time window.

For beneficial effects of the second aspect, refer to corresponding beneficial effects of the first aspect. Details are not described herein.

According to a third aspect, this application provides a transmission indication method. The method includes: A terminal device receives second indication information, where the second indication information indicates that a network device sends no first downlink transmission in a second time window, the second indication information is carried in a first MAC CE or first DCI, and an end moment of the second time window is not later than a transmission moment *T*₁ of a first physical downlink channel carrying a second MAC CE or second DCI. The terminal device determines, based on the second indication information, that the network device sends no first downlink transmission in the second time window. In other words, when the terminal device receives first downlink transmission in the second time window, the first downlink transmission is invalid.

According to the method described in the third aspect, the terminal device can dynamically determine, based on the second indication information in the MAC CE and the DCI, whether the network device sends the first downlink transmission in the second time window. This helps reduce a performance loss of the terminal device. In addition, the end moment of the second time window is not later than the transmission moment *T*₁ of the first physical downlink channel carrying the second MAC CE or the second DCI. In this way, the network device does not need to predict a transmission amount of the first downlink transmission in subsequent time to determine whether to shut down the first downlink transmission. This helps reduce power consumption of the network device.

The transmission moment *T*₁ of the first physical downlink channel may be a transmission start moment of the first physical downlink channel or a transmission end moment of the first physical downlink channel.

In a possible implementation, the second MAC CE or the second DCI is carried on a multicast or broadcast physical downlink channel. Because the multicast or broadcast physical downlink channel is sent to a group of terminal devices and is not user-specific (UE-specific), the second indication information is sent to the terminal devices through the multicast or broadcast physical downlink channel. This avoids a problem of high signaling overheads caused because the network device separately sends the second indication information to each terminal device, and reduces signaling overheads of the network device.

In a possible implementation, the end moment of the second time window is determined based on the transmission moment *T*₁ of the first physical downlink channel.

In a possible implementation, the end moment of the second time window is specifically determined based on the transmission moment *T*₁ of the first physical downlink channel and a second time length Δ*T*2, and the second time length Δ*T*2 is preset or is indicated by the second indication information. The second time length Δ*T*2 is greater than 0. After the second time window, the network device needs a specific processing delay to prepare to send the second indication information. Therefore, the end moment of the second time window is determined based on the transmission moment *T*₁ of the first physical downlink channel and the second time length Δ*T*2, so that the end moment of the second time window is before the transmission moment *T*₁ of the first physical downlink channel, to better match sending processing overheads on the network device side.

In a possible implementation, the end moment of the second time window is an end moment of a third time unit, the third time unit is a latest time unit whose end moment is not later than a moment *T*₃, and the moment *T*₃ = *T*₁ - Δ*T*2. Optionally, the time unit may be a symbol, a sub-slot, a slot, a subframe, or the like. According to the possible implementation, it is ensured that the second time window ends at an end moment of one time unit. This conforms to a feature that the network device and the terminal device perform transmission in a unit of time unit, and can reduce implementation complexity.

In a possible implementation, the end moment of the second time window is an end moment of a fourth time unit, and the fourth time unit is a latest time unit whose end moment is not later than the transmission moment *T*₁ of the first physical downlink channel. According to the possible implementation, the end moment of the second time window is before the transmission moment *T*₁ of the first physical downlink channel, to better match sending processing overheads on the network device side.

In a possible implementation, a duration of the second time window is preset. The preset duration of the second time window helps reduce indication overheads of the duration of the second time window.

In a possible implementation, a duration of the second time window is indicated by the second indication information. The duration of the second time window is indicated by the second indication information, so that the duration of the second time window can be dynamically changed, and the duration of the second time window can be more flexible.

In a possible implementation, the first downlink transmission includes any one or more of the following: a PDCCH, a dynamic scheduling PDSCH, a semi-persistent scheduling physical downlink shared channel SPS PDSCH, a CSI-RS, or an SSB. For example, the first downlink transmission includes the PDCCH, the dynamic scheduling PDSCH, the SPS PDSCH, the CSI-RS, and the SSB. In this way, the power consumption of the network device can be reduced to a greater extent.

In another possible implementation, the first downlink transmission includes: a PDCCH, a dynamic scheduling PDSCH, an SPS PDSCH, and a CSI-RS, and the first downlink transmission does not include an SSB. For SSB transmission, a terminal device in a connected state needs to perform reception, and a terminal device in an idle state or an inactive state also needs to perform reception. However, the terminal device in the idle state or the inactive state may not successfully receive the second indication information. Therefore, reserving the SSB transmission in the second time window helps maintain SSB reception and measurement of the terminal device in the idle state or the inactive state, to avoid a measurement error caused because the network device does not send the S SB but the terminal device in the idle state or the inactive state attempts to detect the SSB, thereby avoiding an unnecessary operation such as cell reselection. In addition, SSB sending has a long periodicity and a small time domain proportion. Sending the SSB by the network device in the second time window does not cause large power consumption of the network device.

In still another possible implementation, the first downlink does not include an SSB and a PDCCH scrambled by a P-RNTI. The PDCCH scrambled by the P-RNTI is used to schedule a paging indication of a user, and a position at which each user receives a PDCCH scrambled by a corresponding P-RNTI is preconfigured. For a terminal device, if the network device skips one transmission occasion of the PDCCH scrambled by the P-RNTI, the terminal device needs to wait for a next pre-configuration occasion. A waiting delay is high. Therefore, reserving, in the second time window, transmission of the PDCCH scrambled by the P-RNTI helps maintain paging reception of the user.

Optionally, when the first downlink transmission includes the PDCCH, the PDCCH includes one or more of the following: a PDCCH scrambled by a C-RNTI, a PDCCH scrambled by a CS-RNTI, a PDCCH scrambled by an SFI-RNTI, a PDCCH scrambled by an INT-RNTI, a PDCCH scrambled by a CI-RNTI, a PDCCH scrambled by a TPC-PUCCH-RNTI, a PDCCH scrambled by a TPC-PUSCH-RNTI, a PDCCH scrambled by a TPC-SRS-RNTI, a PDCCH scrambled by an AI-RNTI, a PDCCH scrambled by an SI-RNTI, a PDCCH scrambled by an RA-RNTI, a PDCCH scrambled by a TC-RNTI, or a PDCCH scrambled by a P-RNTI.

In a possible implementation, the second indication information further indicates that the network device does not receive first uplink transmission in the second time window. Correspondingly, the terminal device may further determine, based on the second indication information, that the network device receives no first uplink transmission in the second time window. In other words, when the terminal device sends the first uplink transmission in the second time window, the first uplink transmission is invalid, and the terminal device considers that the first uplink transmission fails to be received on the network device side. According to the possible implementation, the network device may dynamically shut down the first downlink transmission and the first uplink transmission. This helps reduce the power consumption of the network device.

In a possible implementation, the first uplink transmission may include any one or more of the following: a GB PUSCH, a CG PUSCH, a PUCCH, a PRACH, or an SRS.

In a possible implementation, if the first uplink transmission includes the GB PUSCH, the terminal device does not consider that the GB PUSCH needs to be sent in the second time window. In other words, the terminal device does not expect the GB PUSCH to exist in the second time window.

Optionally, if the first uplink transmission includes the PUCCH, the PUCCH may include one or more of the following: a PUCCH carrying a HARQ-ACK of the dynamic scheduling PDSCH, a PUCCH carrying a HARQ-ACK of the SPS PDSCH, a PUCCH carrying CSI, or a PUCCH carrying an SR or BFR.

In a possible implementation, the second indication information indicates, in an explicit indication manner, that the network device sends no first downlink transmission in the second time window, where a first status value of the second indication information indicates that the network device sends no first downlink transmission in the second time window, and a second status value of the second indication information indicates that the network device sends the first downlink transmission in the second time window.

In a possible implementation, if the terminal device fails to decode the first physical downlink channel carrying the second MAC CE or the second DCI, the terminal device determines that a value of the second indication information is the second status value. According to the possible implementation, the terminal device is prevented from determining valid transmission in the second time window as invalid transmission.

In a possible implementation, if the terminal device fails to decode the first physical downlink channel carrying the second MAC CE or the second DCI, the terminal device determines that a value of the second indication information is the first status value. According to the possible implementation, the terminal device is prevented from determining invalid transmission in the second time window as valid transmission.

In a possible implementation, if the terminal device fails to decode the first physical downlink channel carrying the second MAC CE or the second DCI, the terminal device determines, based on RRC signaling sent by the network device, that a value of the second indication information is the first status value or the second status value. According to the possible implementation, the value of the second indication information can be flexibly determined.

In a possible implementation, the second indication information indicates, in an implicit indication manner, that the network device sends no first downlink transmission in the second time window, where "existence" of the second indication information indicates that the network device sends no first downlink transmission in the second time window, that is, the first downlink transmission becomes invalid, and "no existence" of the second indication information indicates that the network device sends the first downlink transmission in the second time window.

In a possible implementation, if the terminal device fails to decode the first physical downlink channel carrying the second MAC CE or the second DCI, the terminal device determines that the second indication information does not exist. According to the possible implementation, the terminal device is prevented from determining valid transmission in the second time window as invalid transmission.

In a possible implementation, if the terminal device fails to decode the first physical downlink channel carrying the second MAC CE or the second DCI, the terminal device determines that the second indication information exists. According to the possible implementation, the terminal device is prevented from determining invalid transmission in the second time window as valid transmission.

In a possible implementation, if the terminal device fails to decode the first physical downlink channel carrying the second MAC CE or the second DCI, the terminal device determines, based on RRC signaling sent by the network device, whether the second indication information exists. According to the possible implementation, whether the first downlink transmission received in the second time window is valid can be flexibly determined.

In a possible implementation, if the terminal device fails to decode the first physical downlink channel carrying the second MAC CE or the second DCI, the terminal device determines that the network device sends the first downlink transmission in the second time window. According to the possible implementation, the terminal device is prevented from determining valid transmission in the second time window as invalid transmission.

In a possible implementation, if the terminal device fails to decode the first physical downlink channel carrying the second MAC CE or the second DCI, the terminal device determines that the network device sends no first downlink transmission in the second time window. According to the possible implementation, the terminal device is prevented from determining invalid transmission in the second time window as valid transmission.

In a possible implementation, if the terminal device fails to decode the first physical downlink channel carrying the second MAC CE or the second DCI, the terminal device determines, based on RRC signaling sent by the network device, whether the network device sends the first downlink transmission in the second time window. According to the possible implementation, whether the first downlink transmission received in the second time window is valid can be flexibly determined.

According to a fourth aspect, this application provides a transmission indication method. The method includes: A network device skips sending first downlink transmission in a second time window. The network device sends second indication information to a terminal device, where the second indication information indicates that the network device sends no first downlink transmission in the second time window, that is, indicates that first downlink transmission received by the terminal device in the second time window is invalid, the second indication information is carried in first MAC CE signaling or first DCI signaling, and an end moment of the second time window is not later than a transmission moment *T*₁ of a first physical downlink channel carrying a second MAC CE or second DCI.

The transmission moment *T*₁ of the first physical downlink channel may be a transmission start moment of the first physical downlink channel or a transmission end moment of the first physical downlink channel.

In a possible implementation, the second MAC CE or the second DCI is carried on a multicast or broadcast physical downlink channel.

In a possible implementation, a time unit in which the end moment of the second time window is located is a latest time unit whose end moment is not later than a moment *T*₁.

In another possible implementation, the end moment of the second time window is an end moment of a third time unit, the third time unit is a latest time unit whose end moment is not later than a moment *T*₃, and the moment *T*₃ = *T*₁ - Δ*T*2, where *T*₁ is the transmission moment of the first physical downlink channel, Δ*T*2 is a second time length, and the second time length Δ*T*2 is preset, or the second indication information further indicates the second time length Δ*T*2.

In a possible implementation, the end moment of the second time window is an end moment of a fourth time unit, and the fourth time unit is a latest time unit whose end moment is not later than the transmission moment *T*₁ of the first physical downlink channel.

In a possible implementation, a duration of the second time window is preset, or the second indication information further indicates a duration of the second time window.

In a possible implementation, the first downlink transmission includes any one or more of the following: a PDCCH, a dynamic scheduling PDSCH, an SPS PDSCH, a CSI-RS, or an SSB.

In another possible implementation, the first downlink transmission includes: a PDCCH, a dynamic scheduling PDSCH, an SPS PDSCH, and a CSI-RS, and the first downlink transmission does not include an SSB.

In still another possible implementation, the first downlink does not include an SSB and a PDCCH scrambled by a P-RNTI.

Optionally, when the first downlink transmission includes the PDCCH, the PDCCH includes one or more of the following: a PDCCH scrambled by a C-RNTI, a PDCCH scrambled by a CS-RNTI, a PDCCH scrambled by an SFI-RNTI, a PDCCH scrambled by an INT-RNTI, a PDCCH scrambled by a CI-RNTI, a PDCCH scrambled by a TPC-PUCCH-RNTI, a PDCCH scrambled by a TPC-PUSCH-RNTI, a PDCCH scrambled by a TPC-SRS-RNTI, a PDCCH scrambled by an AI-RNTI, a PDCCH scrambled by an SI-RNTI, a PDCCH scrambled by an RA-RNTI, a PDCCH scrambled by a TC-RNTI, or a PDCCH scrambled by a P-RNTI.

In a possible implementation, the second indication information further indicates that the network device does not receive first uplink transmission in the second time window. Correspondingly, the network device does not receive the first uplink transmission in the second time window. According to the possible implementation, the network device may dynamically shut down the first downlink transmission and the first uplink transmission. This helps reduce power consumption of the network device.

In a possible implementation, the first uplink transmission may include any one or more of the following: a GB PUSCH, a CG PUSCH, a PUCCH, a PRACH, or an SRS.

Optionally, when the first downlink transmission includes the PUCCH, the PUCCH may include one or more of the following: a PUCCH carrying a HARQ-ACK of the dynamic scheduling PDSCH, a PUCCH carrying a HARQ-ACK of the SPS PDSCH, a PUCCH carrying CSI, or a PUCCH carrying an SR or BFR.

In a possible implementation, the second indication information indicates, in an explicit indication manner, that the network device sends no first downlink transmission in the second time window, where a first status value of the second indication information indicates that the network device sends no first downlink transmission in the second time window, and a second status value of the second indication information indicates that the network device sends the first downlink transmission in the second time window.

In another possible implementation, the second indication information indicates, in an implicit indication manner, that the network device sends no first downlink transmission in the second time window, where "existence" of the second indication information indicates that the network device sends no first downlink transmission in the second time window, that is, the first downlink transmission becomes invalid, and "no existence" of the second indication information indicates that the network device sends the first downlink transmission in the second time window.

For beneficial effects of the fourth aspect, refer to corresponding beneficial effects of the third aspect. Details are not described herein.

According to a fifth aspect, this application provides a communication apparatus. The communication apparatus may be a terminal device, an apparatus in the terminal device, or an apparatus that can match the terminal device for use. The communication apparatus may alternatively be a chip system. The communication apparatus may perform the method in the first aspect or the third aspect. A function of the communication apparatus may be implemented by hardware, or may be implemented by hardware executing corresponding software. The hardware or the software includes one or more units or modules corresponding to the foregoing function. The unit or the module may be software and/or hardware. For operations performed by the communication apparatus and beneficial effects, refer to the method and beneficial effects in the first aspect or the third aspect.

According to a sixth aspect, this application provides a communication apparatus. The communication apparatus may be a network device, an apparatus in the network device, or an apparatus that can match the network device for use. The communication apparatus may alternatively be a chip system. The communication apparatus may perform the method in the second aspect or the fourth aspect. A function of the communication apparatus may be implemented by hardware, or may be implemented by hardware executing corresponding software. The hardware or the software includes one or more units or modules corresponding to the foregoing function. The unit or the module may be software and/or hardware. For operations performed by the communication apparatus and beneficial effects, refer to the method and beneficial effects in the second aspect or the fourth aspect.

According to a seventh aspect, this application provides a communication apparatus. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the methods in the first aspect to the fourth aspect by using a logic circuit or by executing code instructions.

According to an eighth aspect, this application provides a computer-readable storage medium. The storage medium stores a computer program or instructions. When the computer program or the instructions are executed by a communication apparatus, the methods in the first aspect to the fourth aspect are implemented.

According to a ninth aspect, this application provides a computer program product including instructions. When a communication apparatus reads and executes the instructions, the communication apparatus is enabled to perform the method in any one of the first aspect to the fourth aspect.

According to a tenth aspect, this application provides a communication system, including a communication apparatus configured to perform the method in the first aspect and a communication apparatus configured to perform the method in the second aspect, or including a communication apparatus configured to perform the method in the third aspect and a communication apparatus configured to perform the method in the fourth aspect.

### BRIEF DESCRIPTION OF DRAWINGS

FIG. 1 is a diagram of an existing DRX cycle;
FIG. 2 is a schematic of a communication system according to an embodiment of this application;
FIG. 3 is a diagram of a time unit according to an embodiment of this application;
FIG. 4 is a schematic flowchart of a transmission indication method according to an embodiment of this application;
FIG. 5 is a diagram of a first time window according to an embodiment of this application;
FIG. 6 is a diagram of another first time window according to an embodiment of this application;
FIG. 7 is a diagram of still another first time window according to an embodiment of this application;
FIG. 8 is a diagram of yet another first time window according to an embodiment of this application;
FIG. 9 is a diagram of still yet another first time window according to an embodiment of this application;
FIG. 10 is a schematic flowchart of another transmission indication method according to an embodiment of this application;
FIG. 11 is a diagram of a second time window according to an embodiment of this application;
FIG. 12 is a diagram of another second time window according to an embodiment of this application;
FIG. 13 is a diagram of still another second time window according to an embodiment of this application;
FIG. 14 is a diagram of yet another second time window according to an embodiment of this application;
FIG. 15 is a diagram of still yet another second time window according to an embodiment of this application;
FIG. 16 is a schematic of a structure of a communication apparatus according to an embodiment of this application; and
FIG. 17 is a schematic of a structure of another communication apparatus according to an embodiment of this application.

### DESCRIPTION OF EMBODIMENTS

Terms "first", "second", and the like in the specification, claims, and accompanying drawings of this application are used to distinguish between different objects, but are not used to describe a particular order. In addition, terms "include", "have", and any other variant thereof are intended to cover non-exclusive inclusion. For example, a process, a method, a system, a product, or a device that includes a series of steps or units is not limited to listed steps or units, but optionally further includes an unlisted step or unit, or optionally further includes another inherent step or unit of the process, the method, the product, or the device.

To better understand this application, the following describes a communication system provided in embodiments of this application.

FIG. 2 is a schematic of a communication system 2000 to which an embodiment of this application is applied. As shown in FIG. 2, the communication system 2000 includes a radio access network 100 and a core network 200. Optionally, the communication system 2000 may further include an internet 300. The radio access network 100 may include at least one radio access network device (for example, 110a and 110b in FIG. 2), and may further include at least one terminal device (for example, 120a to 120j in FIG. 2). The terminal device is connected to the radio access network device in a wireless manner, and the radio access network device is connected to the core network in a wireless or wired manner. A core network device and the radio access network device may be different independent physical devices. Alternatively, a function of the core network device and a logical function of the radio access network device may be integrated into a same physical device. Alternatively, some functions of the core network device and some functions of the radio access network device may be integrated into one physical device. A wired or wireless manner may be used for connection between terminal devices and between radio access network devices. FIG. 2 is merely a schematic. The communication system may further include other network devices, for example, may further include a wireless relay device and a wireless backhaul device that are not drawn in FIG. 2.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like, or may be a module or a unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP). The radio access network device may be a macro base station (for example, 110a in FIG. 2), may be a micro base station or an indoor station (for example, 110b in FIG. 2), or may be a relay node, a donor node, or the like. A specific technology and a specific device form that are used by the radio access network device are not limited in embodiments of this application. In embodiments of this application, the radio access network device may be referred to as a network device for short. For ease of description, the radio access network device is referred to as the network device for short in the following descriptions.

The terminal device may also be referred to as a terminal, user equipment (user equipment, UE), a mobile station, a mobile terminal, or the like. The terminal device may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

The network device and the terminal device may be at fixed positions, or may be mobile. The network device and the terminal device may be deployed on the land, including an indoor device, an outdoor device, a handheld device, or a vehicle-mounted device; may be deployed on a water surface; or may be deployed on an airplane, a balloon, and an artificial satellite in the air. Application scenarios of the network device and the terminal device are not limited in embodiments of this application.

Roles of the network device and the terminal device may be relative. For example, the helicopter or the uncrewed aerial vehicle 120i in FIG. 2 may be configured as a mobile network device. For those terminal devices 120j that access the radio access network 100 through 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, for 110a, 120i is also a network device. Therefore, both the network device and the terminal device may be collectively referred to as communication apparatuses. 110a and 110b in FIG. 2 may be referred to as communication apparatuses having a function of the network device, and 120a to 120j in FIG. 2 may be referred to as communication apparatuses having a function of the terminal device.

Communication may be performed between the network device and the terminal device, between the network devices, and between the terminal devices through a licensed spectrum, through an unlicensed spectrum, or through both a licensed spectrum and an unlicensed spectrum. Communication may be performed through a spectrum below 6 gigahertz (gigahertz, GHz), through a spectrum above 6 GHz, or through both a spectrum below 6 GHz and a spectrum above 6 GHz. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid scenario, the industrial control scenario, the smart transportation scenario, and the smart city scenario. The function of the terminal device may alternatively be performed by a module (for example, a chip or a modem) in the terminal device, or may be performed by an apparatus including the function of the terminal device.

The following explains and describes some nouns or terms used in embodiments of this application.

### (1) Physical downlink channel

The physical downlink channel includes a PDSCH and a PDCCH. The PDCCH is used to carry DCI, and a potential transmission position (including a time domain position and a frequency domain position) of the PDCCH is configured by using RRC signaling. The PDSCH is used to carry a downlink data channel, and the PDSCH includes a dynamic scheduling PDSCH and an SPS PDSCH. For the dynamic scheduling PDSCH, each time of PDSCH transmission corresponds to one piece of DCI, and the DCI indicates a time-frequency resource and another parameter of the PDSCH transmission. For the SPS PDSCH, SPS PDSCH transmission is periodically repeated, a transmission periodicity is configured by using the RRC signaling, first transmission is activated by using the DCI, and last transmission is deactivated also by using the DCI.

### (2) DCI transmission occasion

The DCI transmission occasion is also referred to as a PDCCH transmission occasion, and is a potential time domain position of PDCCH transmission, or is a time domain position of a start symbol of PDCCH transmission.

### (3) SPS PDSCH transmission occasion

The SPS PDSCH transmission occasion is a time domain position of the SPS PDSCH transmission. Specifically, the first transmission of the SPS PDSCH is determined based on a time domain resource allocation field in activation DCI, and a time domain position of other subsequent transmission is determined based on a position of the first transmission and a preset periodicity of the SPS PDSCH.

### (4) Multicast or broadcast physical downlink channel

One multicast or broadcast physical downlink channel may be detected and decoded by a plurality of terminal devices. The multicast or broadcast physical downlink channel includes a multicast or broadcast PDSCH and a multicast or broadcast PDCCH.

In this application, the broadcast PDSCH may be scheduled by using one piece of broadcast DCI. For example, the broadcast DCI is scrambled by a common RNTI of one cell. In this way, all terminal devices in the cell can decode the broadcast DCI by using the RNTI, to receive the broadcast PDSCH. The multicast PDSCH may be scheduled by using one piece of multicast DCI. For example, the multicast DCI is scrambled by a common RNTI of one user group. In this way, all terminal devices in the user group can decode the multicast DCI by using the RNTI, to receive the multicast PDSCH.

In this application, DCI carried on the multicast or broadcast PDCCH is referred to as broadcast DCI or multicast DCI for short. The multicast DCI may also be referred to as group common DCI. The broadcast DCI is scrambled by a common RNTI of one cell. In this way, all terminal devices in the cell can decode the broadcast DCI by using the RNTI. The multicast DCI is scrambled by a common RNTI of one user group. In this way, all terminal devices in the user group can decode the multicast DCI by using the RNTI.

### (5) Time unit

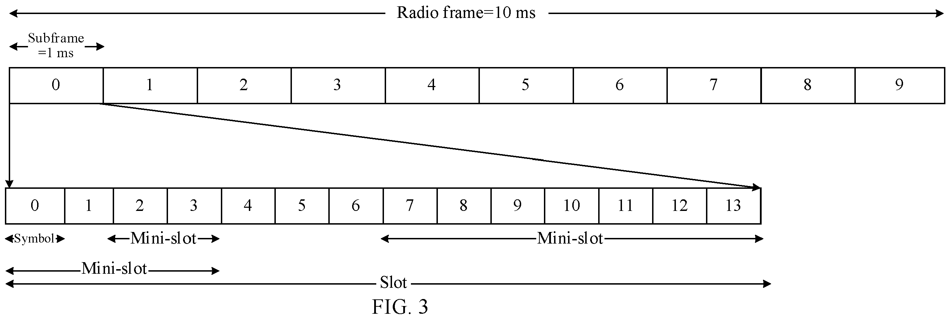

The time unit is a time domain unit used for signal transmission, and may include a unit of a time domain such as a radio frame (radio frame), a subframe (subframe), a slot (slot), a mini-slot (mini-slot), or at least one orthogonal frequency division multiplexing (Orthogonal Frequency Division Multiplexing, OFDM) symbol. The OFDM symbol may also be referred to as a time domain symbol for short. FIG. 3 is a diagram of a possible time unit relationship according to this application. Refer to FIG. 3. A time domain length of one radio frame is 10 ms. One radio frame may include 10 radio subframes, and a time domain length of one radio subframe is 1 ms. One radio subframe may include one or more slots, and a specific quantity of slots included in one subframe is related to a subcarrier spacing (Subcarrier Spacing, SCS). When the SCS is 15 kHz, a time domain length of one slot is 1 ms. One slot includes 14 symbols.

### (6) Discontinuous transmission (dis-continuous transmit, DTX) mechanism

To reduce power consumption of a communication device, the communication device may be enabled not to send data transmission within a period of time, or the communication device may be enabled not to send all channels or some channels within a period of time. This manner of reducing the power consumption of the communication device may be referred to as the DTX mechanism. The following uses an example in which the communication device is a network device for description.

For example, the network device may set a transmission pattern, perform data transmission only in some time periods in one transmission periodicity, and perform no data sending or data receiving or sending in another time period.

When there is no service load, a DTX mechanism of the network device may be used, to reduce power consumption of the network device.

When there is a light service load, although data transmission is performed in many transmission time intervals, resource utilization of the transmission time intervals is low. In this case, the DTX mechanism of the network device may also be used. To-be-sent data is aggregated to a time period A for sending, so that a DTX state can be entered in a time period B, to implement static energy saving for the network device.

It should be noted that, for the DTX mechanism of the network device, the network device may select, in each TTI, whether to perform data receiving or sending or be silent, and notify a terminal device; or the network device may determine, through triggering by the terminal device, whether to perform data receiving or sending or be silent.

The following further describes in detail a transmission indication method and a communication apparatus provided in embodiments of this application.

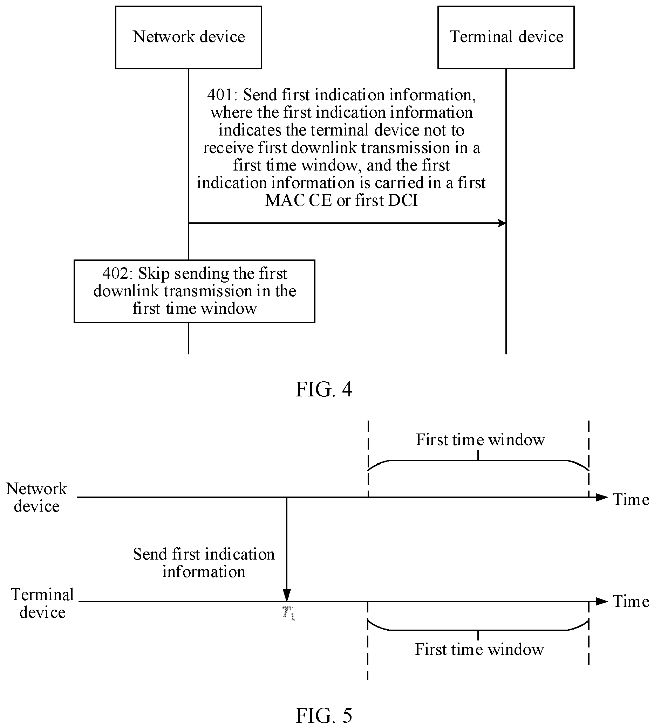

FIG. 4 is a schematic flowchart of a transmission indication method according to an embodiment of this application. As shown in FIG. 4, the transmission indication method includes the following step 401 and step 402. Execution bodies of the method shown in FIG. 4 may be a terminal device and a network device. Alternatively, execution bodies of the method shown in FIG. 4 may be a chip in the terminal device and a chip in the network device. FIG. 4 is described by using an example in which the terminal device and the network device are the execution bodies of the method.

401: The network device sends first indication information to the terminal device. Correspondingly, the terminal device may receive the first indication information.

The first indication information indicates the terminal device not to receive first downlink transmission in a first time window, and the first indication information is carried in a first MAC CE or first DCI.

**402:** The network device skips sending the first downlink transmission in the first time window. Correspondingly, the terminal device does not receive the first downlink transmission in the first time window based on the first indication information.

In other words, the network device may implement DTX transmission, and the terminal device may implement DRX transmission.

**The following describes in detail related content of the first MAC CE carrying the first indication information.**

In a possible implementation, the first MAC CE is carried on a multicast or broadcast PDSCH. Because the multicast or broadcast PDSCH is sent to a group of terminal devices and is not user-specific (UE-specific), the first indication information is sent to the terminal devices through the multicast or broadcast PDSCH. This avoids a problem of high signaling overheads caused because the network device separately sends the first indication information to each terminal device, and reduces signaling overheads of the network device.

In a possible implementation, the first MAC CE may alternatively be carried on a unicast PDSCH.

In a possible implementation, the PDSCH carrying the first MAC CE may be an SPS PDSCH. The terminal device may receive the SPS PDSCH on a preset SPS PDSCH transmission occasion (occasion), and decode the SPS PDSCH, to obtain the first MAC CE. Because the SPS PDSCH occasion periodically appears, a relationship between the first time window and the SPS PDSCH transmission occasion may meet one or more of the following relationships:
(1) A periodicity length of the SPS PDSCH may be predefined as a duration of the first time window. In this way, the duration of the first time window does not need to be additionally configured.
(2) An end moment of the first time window may be predefined as a start moment of a next SPS PDSCH transmission occasion. In this way, an end moment of the first time window does not need to be additionally configured.

The first MAC CE is carried on the SPS PDSCH, and the relationship between the SPS PDSCH transmission occasion and the first time window is predefined. This helps reduce indication overheads.

In a possible implementation, the PDSCH carrying the first MAC CE may be a dynamic (dynamic) scheduling PDSCH.

**The following describes in detail related content of the first DCI carrying the first indication information.**

In a possible implementation, the first DCI may be carried on a multicast or broadcast PDCCH. In other words, the first DCI may be multicast DCI or broadcast DCI. For the network device, in comparison with respectively sending corresponding first indication information to each terminal device, sending the first indication information by using the multicast DCI or the broadcast DCI helps reduce indication overheads.

In a possible implementation, the first DCI may alternatively be carried on a unicast PDCCH.

Based on that the first DCI is carried on the multicast or broadcast PDCCH or carried on the unicast PDCCH, the first DCI may further have one or more of the following designs:
Manner 1: One field is added to a DCI format in an existing protocol, to obtain the first DCI, where the added field is used to carry the first indication information.
Manner 2: A DCI format different from that in the existing protocol is designed, to obtain the first DCI. In other words, the first DCI is different from the DCI format in the existing protocol. Compared with the DCI format in the existing protocol, the first DCI is a new DCI format.
Manner 3: The first DCI corresponds to a new RNTI, and the RNTI is used to scramble the first DCI. For example, the scrambling RNTI has a same value for a plurality of terminal devices, and the plurality of terminal devices can detect and decode the first DCI.

In this embodiment of this application, the terminal device may determine a position of the first time window based on two or three of a start moment of the first time window, the duration of the first time window, and the end moment of the first time window.

**The following separately describes the start moment of the first time window, the duration of the first time window, and the end moment of the first time window.**

### (1) Start moment of the first time window

The start moment of the first time window is not earlier than a transmission moment *T*₁ of a first physical downlink channel carrying the first MAC CE or the first DCI. For example, the start moment of the first time window may be equivalent to the transmission moment *T*₁ of the first physical downlink channel. Alternatively, the start moment of the first time window is after the transmission moment *T*₁ of the first physical downlink channel. The transmission moment *T*₁ of the first physical downlink channel may be a transmission start moment of the first physical downlink channel or a transmission end moment of the first physical downlink channel.

It should be noted that the transmission moment *T*₁ in this application is a transmission moment understood by the network device and the terminal device in alignment. For example, for the network device, the transmission moment *T*₁ of the first physical downlink channel may be a sending moment of the first physical downlink channel. For the terminal device, the transmission moment *T*₁ of the first physical downlink channel may be a receiving moment of the first physical downlink channel.

FIG. 5 is an example in which the start moment of the first time window is after the transmission moment *T*₁ of the first physical downlink channel. As shown in FIG. 5, the network device sends the first indication information to the terminal device through the first physical downlink channel. After the network device sends the first indication information, the network device does not send the first downlink transmission in the first time window after the transmission moment *T*₁ of the first physical downlink channel. Correspondingly, after the terminal device receives the first indication information, the terminal device does not receive, based on the first indication information, the first downlink transmission in the first time window after the transmission moment *T*₁ of the first physical downlink channel.

Because the start moment of the first time window is not earlier than the transmission moment *T*₁ of the first physical downlink channel carrying the first MAC CE or the first DCI, the following provides several optional manners for determining the start moment of the first time window:
Manner A: The start moment of the first time window is determined based on the transmission moment *T*₁ of the first physical downlink channel and a first time length Δ*T*1, and the first time length Δ*T*1 is preset or is indicated by the first indication information. That the first time length Δ*T*1 is preset means that the first time length Δ*T*1 is pre-specified in a protocol. Alternatively, that the first time length Δ*T*1 is preset means that the first time length Δ*T*1 is configured by the network device by using RRC signaling. After receiving the first physical downlink channel, the terminal device needs specific time to obtain the first indication information through decoding. The start moment of the first time window is determined based on the transmission moment *T*₁ of the first physical downlink channel and the first time length Δ*T*1, so that it is ensured that the determined start moment of the first time window is after a moment at which the terminal device parses out the first indication information. This avoids a case in which the terminal device does not determine, before parsing out the first indication information, whether the first downlink transmission needs to be received.

Optionally, the start moment of the first time window is a start moment of a first time unit, the first time unit is an earliest time unit whose start moment is not earlier than a moment *T*₂, and the moment *T*₂ = *T*₁ + Δ*T*1. According to the possible implementation, it is ensured that the first time window starts from a start moment of one time unit. This conforms to a feature that the network device and the terminal device perform transmission in a unit of time unit, and can reduce implementation complexity.

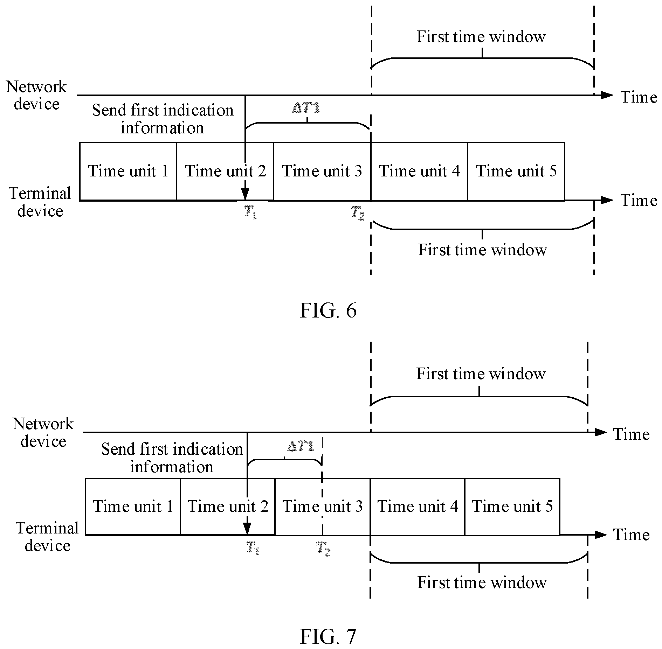

For example, the transmission moment *T*₁ of the first physical downlink channel, the first time length Δ*T*1, and the moment *T*₂ are shown in FIG. 6. A start moment of a time unit 4 is equivalent to the moment *T*₂. Because the time unit 4 is an earliest time unit whose start moment is not earlier than the moment *T*₂, the first time unit is the time unit 4.

For another example, the transmission moment *T*₁ of the first physical downlink channel, the first time length Δ*T*1, and the moment *T*₂ are shown in FIG. 7. A start moment of a time unit 4 is later than the moment *T*₂. Because the time unit 4 is an earliest time unit whose start moment is not earlier than the moment *T*₂, the first time unit is the time unit 4.

Optionally, the first time length Δ*T*1 is greater than or equal to a first threshold, and the first threshold is a shortest processing duration supported by the terminal device for the first physical downlink channel. In this way, it is ensured that the determined start moment of the first time window is after the moment at which the terminal device parses out the first indication information. This avoids a problem of a communication exception caused because the terminal device does not determine, before parsing out the first indication information, whether the first downlink transmission needs to be received.

Optionally, the first threshold may be pre-specified in the protocol. In other words, the shortest processing duration supported by the terminal device for the first physical downlink channel is pre-specified in the protocol. For ease of description, the shortest processing duration supported by the terminal device for the first physical downlink channel is referred to as the shortest processing duration for short below.

Optionally, the first physical downlink channel is a first PDSCH. The shortest processing duration is a shortest processing duration *T*_{*proc,*1} from time when the terminal device receives the first PDSCH to time when the terminal device sends a HARQ-ACK corresponding to the first PDSCH; or the shortest processing duration is a shortest processing duration *T̃*_{*proc,*1} needed from time when the terminal device receives the first PDSCH to time when the terminal device completes decoding on the first PDSCH. For example, *T̃*_{*proc,*1} = *aT*_{*proc,*1} + b. Parameters *a* and b are predefined in the protocol. For a definition of the shortest processing duration *T*_{*proc*,1}, refer to related descriptions in the section 5.3 of 3GPP TS 38.214. Details are not described herein. Optionally, a value of the parameter *a* meets 0 < *a* ≤ 1 or 0 < *a* ≤ 0.5, and a value of the parameter b is 0 or a length of one or two transmission symbols.

Optionally, if the first physical downlink channel is a first PDCCH, the shortest processing duration may be a shortest processing duration *T*_{*proc,*2} from time when the terminal device receives the first PDCCH to time when the terminal device sends a PUSCH scheduled by the first PDCCH, or a shortest processing duration *T̃*_{*proc,*2} needed from time when the terminal device receives the first PDCCH to time when the terminal device completes decoding on the first PDCCH. For example, *T̃*_{*proc,*2} = *cT*_{*proc,*2} + d. For a definition of the shortest processing duration *T*_{*proc,*2}, refer to related descriptions in the section 6.4 of 3GPP TS 38.214. Parameters c and d are predefined in the protocol. Optionally, a value of the parameter c meets 0 < c ≤ 1 or 0 < c ≤ 0.5, and a value of the parameter d is 0 or a length of one or two transmission symbols.

Optionally, that the shortest processing duration includes N shortest processing durations in different cases is pre-specified in the protocol, where N is greater than 1, and the first threshold is a largest value in the foregoing *N* shortest processing durations; or the first threshold is an *n*^{th} value in the foregoing *N* shortest processing durations, where 1 ≤ n ≤ N, and n is pre-indicated by the network device. For example, two types of processing capabilities of the terminal device are defined in the protocol, and correspond to *N* = 2 shortest processing durations. To ensure that all terminal devices in a cell can successfully obtain, in time, the first indication information through decoding and perform decoding in the first time window, the first threshold is a largest value in the foregoing two shortest processing durations.

Manner B: The start moment of the first time window is determined based on the transmission moment *T*₁ of the first physical downlink channel. For example, the start moment of the first time window is a start moment of a second time unit, and the second time unit is an earliest time unit whose start moment is not earlier than the transmission moment *T*₁ of the first physical downlink channel.

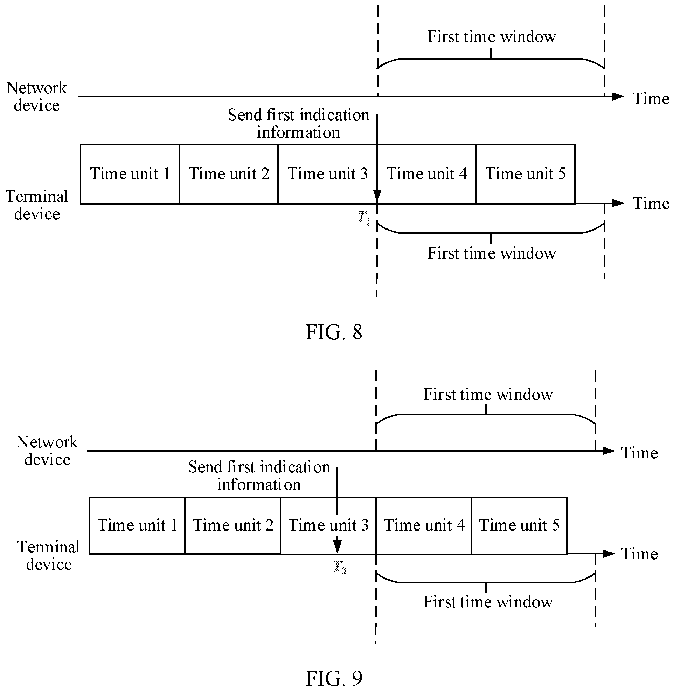

For example, the transmission moment *T*₁ of the first physical downlink channel is shown in FIG. 8. A start moment of a time unit 4 is equivalent to the transmission moment *T*₁ of the first physical downlink channel. Because the time unit 4 is an earliest time unit whose start moment is not earlier than the transmission moment *T*₁ of the first physical downlink channel, the second time unit is the time unit 4.

For another example, the transmission moment *T*₁ of the first physical downlink channel is shown in FIG. 9. A start moment of a time unit 4 is later than the transmission moment *T*₁ of the first physical downlink channel. Because the time unit 4 is an earliest time unit whose start moment is not earlier than the transmission moment *T*₁ of the first physical downlink channel, the second time unit is the time unit 4.

Manner C: The start moment of the first time window may be directly indicated by the first indication information. This helps reduce a calculation amount of the terminal device and reduce power consumption of the terminal device.

### (2) Duration of the first time window

The duration of the first time window is preset or is indicated by the first indication information. That the duration of the first time window is preset means that the duration of the first time window is pre-specified in the protocol. Alternatively, that the duration of the first time window is preset means that the duration of the first time window is configured by the network device by using the RRC signaling.

The preset duration of the first time window helps reduce indication overheads of the duration of the first time window. The duration of the first time window is indicated by the first indication information, so that the duration of the first time window can be dynamically changed, and the duration of the first time window can be more flexible.

### (3) End moment of the first time window

The end moment of the first time window is preset or is indicated by the first indication information. That the end moment of the first time window is preset means that the end moment of the first time window is pre-specified in the protocol. Alternatively, that the end moment of the first time window is preset means that the end moment of the first time window is configured by the network device by using the RRC signaling. For example, the network device may configure the following by using the RRC signaling: When the first indication information is carried in the first MAC CE and the first MAC CE is carried on the SPS PDSCH, the end moment of the first time window is a start moment of a next detection occasion of the SPS PDSCH carrying the first MAC CE. Alternatively, when the first indication information is carried in the first DCI, the end moment of the first time window is a start moment of a next detection occasion of the first DCI carrying the first indication information.

The preset end moment of the first time window helps reduce indication overheads of the end moment of the first time window. The end moment of the first time window is indicated by the first indication information. This helps reduce a calculation amount of the terminal device and reduce power consumption of the terminal device.

**The following describes in detail related content of the first downlink transmission.**

In a possible implementation, the first downlink transmission includes any one or more of the following: the PDCCH, a dynamic scheduling PDSCH, the SPS PDSCH, a CSI-RS, or an SSB. For example, the first downlink transmission includes the PDCCH, the dynamic scheduling PDSCH, the SPS PDSCH, the CSI-RS, and the SSB. In this way, the network device and the terminal device can dynamically shut down much downlink transmission. This helps reduce power consumption of the network device and the terminal device.

That the terminal device does not receive the PDCCH in the first time window means that the terminal device does not perform blind detection on the PDCCH on the PDCCH transmission occasion in the first time window.

That the terminal device does not receive the dynamic scheduling PDSCH in the first time window means that the terminal device does not receive the dynamic scheduling PDSCH in the first time window, and the terminal device considers that there is no dynamic scheduling PDSCH transmission, and does not generate feedback information corresponding to the dynamic scheduling PDSCH.

That the terminal device does not receive the SPS PDSCH in the first time window means that the terminal device does not receive the SPS PDSCH on the SPS PDSCH transmission occasion in the first time window, and the terminal device considers that there is no SPS PDSCH transmission, and does not generate feedback information corresponding to the SPS PDSCH.

That the terminal device does not receive the CSI-RS in the first time window means that the terminal device does not measure the CSI-RS in the first time window, and the terminal device considers that there is no CSI-RS transmission, and does not generate a measurement result of the CSI-RS.

In a possible implementation, the first downlink transmission includes: the PDCCH, a dynamic scheduling PDSCH, the SPS PDSCH, and a CSI-RS, and the first downlink transmission does not include an SSB. For SSB transmission, a terminal device in a connected state needs to perform reception, and a terminal device in an idle state or an inactive state also needs to perform reception. However, the terminal device in the idle state or the inactive state may not successfully receive the first indication information. Therefore, reserving the SSB transmission in the first time window helps maintain SSB reception and measurement of the terminal device in the idle state or the inactive state, to avoid a measurement error caused because the network device does not send the S SB but the terminal device in the idle state or the inactive state attempts to detect the SSB, thereby avoiding an unnecessary operation such as cell reselection. In addition, SSB sending has a long periodicity and a small time domain proportion. Sending the SSB by the network device in the first time window does not cause large power consumption of the network device. Similarly, receiving the SSB by the terminal device in the first time window does not cause large power consumption of the terminal device.

In a possible implementation, the first downlink transmission does not include an SSB and a PDCCH scrambled by a P-RNTI. The PDCCH scrambled by the P-RNTI is used to schedule a paging indication of the terminal device, and a position at which each terminal device receives a PDCCH scrambled by a corresponding P-RNTI is preconfigured. For a terminal device, if this time the network device skips a transmission occasion of the PDCCH scrambled by the P-RNTI, the terminal device needs to wait for a next pre-configuration occasion. A waiting delay is high. Therefore, reserving, in the first time window, transmission of the PDCCH scrambled by the P-RNTI helps maintain paging reception of the terminal device.

Optionally, when the first downlink transmission includes the PDCCH, the PDCCH includes one or more of the following: a PDCCH scrambled by a C-RNTI, a PDCCH scrambled by a CS-RNTI, a PDCCH scrambled by an SFI-RNTI, a PDCCH scrambled by an INT-RNTI, a PDCCH scrambled by a CI-RNTI, a PDCCH scrambled by a TPC-PUCCH-RNTI, a PDCCH scrambled by a TPC-PUSCH-RNTI, a PDCCH scrambled by a TPC-SRS-RNTI, a PDCCH scrambled by an AI-RNTI, a PDCCH scrambled by an SI-RNTI, a PDCCH scrambled by an RA-RNTI, a PDCCH scrambled by a TC-RNTI, or a PDCCH scrambled by a P-RNTI. In other words, the terminal device does not perform, in the first time window, blind detection on the PDCCHs scrambled by the RNTIs.

In a possible implementation, the first indication information further indicates the terminal device not to send first uplink transmission in the first time window. Correspondingly, the terminal device may further not send the first uplink transmission in the first time window based on the first indication information, and the network device does not receive the first uplink transmission in the first time window. According to the possible implementation, the network device may not only shut down sending of the first downlink transmission, but also shut down receiving of the first uplink transmission and signal processing corresponding to the first uplink transmission, to further reduce the power consumption of the network device. Correspondingly, the terminal device may dynamically shut down receiving of the first downlink transmission and sending of the first uplink transmission. This helps reduce the power consumption of the terminal device.

In a possible implementation, the first uplink transmission may include any one or more of the following: a GB PUSCH, a CG PUSCH, a PUCCH, a PRACH, or an SRS.

In the specification of this application, the GB PUSCH is a PUSCH determined based on one piece of UL DCI. In other words, the PUSCH is scheduled by using one piece of UL DCI.

In a possible implementation, if the first uplink transmission includes the GB PUSCH, the terminal device does not consider that the GB PUSCH needs to be sent in the first time window. In other words, the terminal device does not expect the GB PUSCH to exist in the first time window.

Optionally, when the first uplink transmission includes the PUCCH, the PUCCH may include one or more of the following: a PUCCH carrying a HARQ-ACK of the dynamic scheduling PDSCH, a PUCCH carrying a HARQ-ACK of the SPS PDSCH, a PUCCH carrying channel state information CSI, or a PUCCH carrying an SR or BFR.

The first indication information may indicate, in an explicit indication manner or an implicit indication manner, the terminal device not to receive the first downlink transmission in the first time window.

### (1) Explicit indication manner

In a possible implementation, the first indication information is an information bit, and different status values of the information bit indicate different information. A first status value of the first indication information indicates the terminal device not to receive the first downlink transmission in the first time window, and a second status value of the first indication information indicates the terminal device to receive the first downlink transmission in the first time window.

For example, the first indication information is a 1-bit information bit. When a status value of the bit of 1 is 1, the first indication information indicates the terminal device not to receive the first downlink transmission in the first time window. When a status value of the bit of 1 is 0, the first indication information indicates the terminal device to receive the first downlink transmission in the first time window. Alternatively, when a status value of the bit of 1 is 0, the first indication information indicates the terminal device not to receive the first downlink transmission in the first time window. When a status value of the bit of 1 is 1, the first indication information indicates the terminal device to receive the first downlink transmission in the first time window.

For another example, the first indication information is a 2-bit information bit. When a status value of the bit of 2 is 11, the terminal device is indicated not to receive the first downlink transmission in the first time window. When a status value of the bit of 2 is 00, the terminal device is indicated to receive the first downlink transmission in the first time window. Alternatively, when a status value of the bit of 2 is 00, the terminal device is indicated not to receive the first downlink transmission in the first time window. When a status value of the bit of 2 is 11, the terminal device is indicated to receive the first downlink transmission in the first time window.

In a possible implementation, if the terminal device fails to decode the first physical downlink channel carrying the first MAC CE or the first DCI, the terminal device determines that a value of the first indication information is the second status value. According to the possible implementation, the terminal device does not miss downlink transmission.

In a possible implementation, if the terminal device fails to decode the first physical downlink channel carrying the first MAC CE or the first DCI, the terminal device determines that a value of the first indication information is the first status value. According to the possible implementation, the power consumption of the terminal device is reduced.

In a possible implementation, if the terminal device fails to decode the first physical downlink channel carrying the first MAC CE or the first DCI, the terminal device determines, based on the radio resource control (radio resource control, RRC) signaling sent by the network device, that a value of the first indication information is the first status value or the second status value. According to the possible implementation, the value of the first indication information can be flexibly determined.

### (2) Implicit indication manner

The terminal device determines, by detecting whether the first indication information exists in the first MAC CE or the first DCI, whether to receive the first downlink transmission in the first time window. In a possible implementation, "existence" of the first indication information indicates the terminal device not to receive the first downlink transmission in the first time window, and "no existence" of the first indication information indicates the terminal device to receive the first downlink transmission in the first time window. Alternatively, "no existence" of the first indication information indicates the terminal device not to receive the first downlink transmission in the first time window, and "existence" of the first indication information indicates the terminal device to receive the first downlink transmission in the first time window.

That the first indication information is carried in the first MAC CE is used as an example. When the first MAC CE is carried on the SPS PDSCH, the terminal device receives the SPS PDSCH at a preset time-frequency position, decodes the SPS PDSCH, and queries, after the decoding, whether the data block includes the first MAC CE. If the first MAC CE is included, that is, the first indication information "exists", the terminal device does not receive the first downlink transmission in the first time window. When the data block does not include the first MAC CE, that is, the first indication information "does not exist", the terminal device receives the first downlink transmission in the first time window.

In a possible implementation, if the terminal device fails to decode the first physical downlink channel carrying the first MAC CE or the first DCI, the terminal device determines that the first indication information does not exist. According to the possible implementation, the terminal device does not miss downlink transmission, and communication quality is ensured.

In a possible implementation, if the terminal device fails to decode the first physical downlink channel carrying the first MAC CE or the first DCI, the terminal device determines that the first indication information exists. According to the possible implementation, the power consumption of the terminal device is reduced.

In a possible implementation, if the terminal device fails to decode the first physical downlink channel carrying the first MAC CE or the first DCI, the terminal device determines, based on the RRC signaling sent by the network device, whether the first indication information exists. According to the possible implementation, whether the first indication information exists can be flexibly determined.

In a possible implementation, that the network device does not send the first downlink transmission in the first time window may alternatively be understood as that the network device is in an inactive state in the first time window. That the network device sends the first downlink transmission in the first time window may alternatively be understood as that the network device is in an active state in the first time window. Correspondingly, that the terminal device does not receive the first downlink transmission in the first time window may be understood as that the terminal device is in an inactive state in the first time window. That the terminal device receives the first downlink transmission in the first time window may be understood as that the terminal device is in an active state in the first time window. That the first indication information indicates the terminal device not to receive the first downlink transmission in the first time window may alternatively be understood as that the first indication information indicates the terminal device to be in the inactive state in the first time window. That the first indication information indicates the terminal device to receive the first downlink transmission in the first time window may alternatively be understood as that the first indication information indicates the terminal device to be in the active state in the first time window.

In a possible implementation, because the network device does not send the first downlink transmission in the first time window, and the terminal device does not receive the first downlink transmission in the first time window, for a case in which there is a transmission requirement in the first time window, the network device may resend the first downlink transmission and/or receive the first uplink transmission on an available time-frequency resource after the first time window ends, and the terminal device may re-receive the first downlink transmission and/or send the first uplink transmission on an available time-frequency resource after the first time window ends. According to the possible implementation, energy saving of the network device and the terminal device can be implemented without sacrificing data transmission.

In a possible implementation, if the terminal device fails to decode the first physical downlink channel carrying the first MAC CE or the first DCI, the terminal device receives the first downlink transmission in the first time window. In other words, when the terminal device cannot learn of the first indication information, the terminal device receives the first downlink transmission in the first time window. Alternatively, it is understood as that when the terminal device cannot learn of the first indication information, the terminal device considers that the first indication information indicates the terminal device to receive the downlink transmission in the first time window. According to the possible implementation, the terminal device does not miss the downlink transmission.

In a possible implementation, if the terminal device fails to decode the first physical downlink channel carrying the first MAC CE or the first DCI, the terminal device does not receive the first downlink transmission in the first time window. In other words, when the terminal device cannot learn of the first indication information, the terminal device does not receive the downlink transmission in the first time window. Alternatively, it is understood as that when the terminal device cannot learn of the first indication information, the terminal device considers that the first indication information indicates the terminal device not to receive the downlink transmission in the first time window. According to the possible implementation, the power consumption of the terminal device is reduced.

In a possible implementation, if the terminal device fails to decode the first physical downlink channel carrying the first MAC CE or the first DCI, the terminal device determines, based on the RRC signaling sent by the network device, whether to receive the first downlink transmission in the first time window. According to the possible implementation, when the terminal device fails to decode the first physical downlink channel carrying the first MAC CE or the first DCI, the terminal device may flexibly determine, based on the RRC signaling, whether to receive the first downlink transmission in the first time window.

In a possible implementation, the first indication information is carried in the first MAC CE, and the first MAC CE is carried on the SPS PDSCH. When the first indication information indicates not to receive the first downlink transmission in the first time window, and the first time window includes a next transmission occasion of the SPS PDSCH carrying the first MAC CE, the terminal device performs any one of the following operations:
(1) Skip receiving the SPS PDSCH on the next transmission occasion. This helps reduce the power consumption of the terminal device. Correspondingly, the network device does not send the SPS PDSCH on the next transmission occasion, to reduce the power consumption of the network device.
(2) The terminal device receives the SPS PDSCH on the next transmission occasion, and determines, based on the first indication information in the SPS PDSCH received on the next transmission occasion, whether to receive the first downlink transmission in a next first time window. Correspondingly, the network device sends the SPS PDSCH on the next transmission occasion.
   For example, the terminal device determines, based on the first indication information in the SPS PDSCH received on the next transmission occasion, that the first downlink transmission needs to be performed in the next first time window. When the latter first time window partially overlaps the former first time window, behavior of the terminal device in the next first time window overwrites behavior of the terminal device in the previous first time window. In other words, the terminal device performs first downlink transmission in an overlapping part. In this way, the network device may continuously adjust decision behavior to obtain maximum scheduling flexibility.
(3) The terminal device determines, based on the RRC signaling sent by the network device, whether to receive the SPS PDSCH on the next transmission occasion. In this way, whether to receive the SPS PDSCH in the first time window can be more flexibly determined.

In a possible implementation, the first indication information is carried in the first DCI. When the first indication information indicates not to receive the first downlink transmission in the first time window, and the first time window includes a next transmission occasion of the first DCI, the terminal device performs any one of the following operations:
(1) Skip receiving the first DCI on the next transmission occasion. Correspondingly, the network device does not send the first DCI on the next transmission occasion, to reduce the power consumption of the network device.
(2) The terminal device receives the first DCI on the next transmission occasion, and determines, based on the first indication information in the first DCI received on the next transmission occasion, whether to receive the first downlink transmission in a next first time window. Correspondingly, the network device sends the first DCI on the next transmission occasion.
   For example, the terminal device determines, based on the first indication information in the first DCI received on the next transmission occasion, that the first downlink transmission needs to be performed in the next first time window. When the latter time occasion window partially overlaps the former first time window, behavior of the terminal device in the next first time window overwrites behavior of the terminal device in the previous first time window. In other words, the terminal device performs first downlink transmission in an overlapping part. In this way, the network device may continuously adjust decision behavior to obtain maximum scheduling flexibility.
(3) The terminal device determines, based on the RRC signaling sent by the network device, whether to receive the first DCI on the first DCI transmission occasion. In this way, whether to receive the first DCI in the first time window can be more flexibly determined.

It can be learned that through implementation of the method described in FIG. 4, the network device can indicate, by using the MAC CE and the DCI, the terminal device not to receive the first downlink transmission in the first time window, and can dynamically and flexibly configure DRX for the terminal device. This helps reduce a performance loss of the terminal device, and reduce the power consumption of the network device and the terminal device.

The following describes another transmission indication method provided in embodiments of this application.

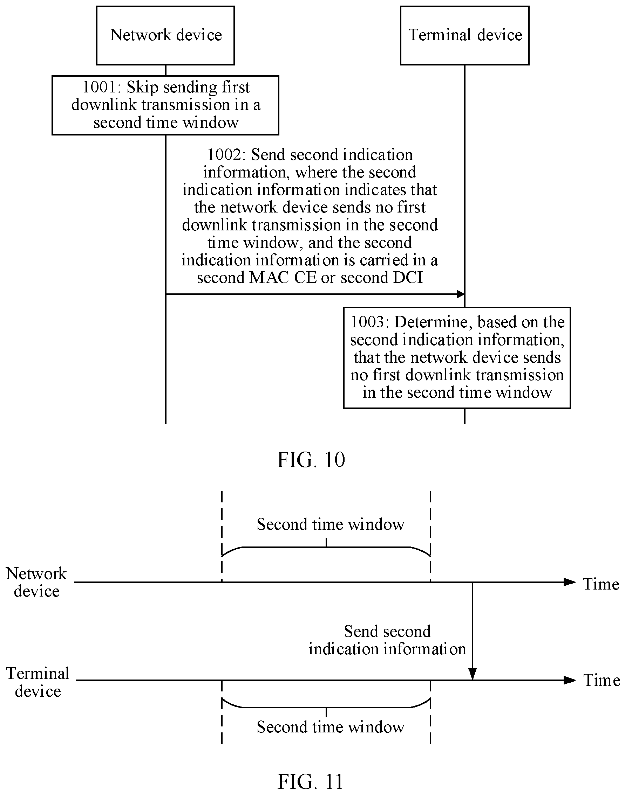

FIG. 10 is a schematic flowchart of another transmission indication method according to an embodiment of this application. As shown in FIG. 10, the transmission indication method includes the following step 1001 to step 1003. Execution bodies of the method shown in FIG. 10 may be a terminal device and a network device. Alternatively, execution bodies of the method shown in FIG. 10 may be a chip in the terminal device and a chip in the network device. FIG. 10 is described by using an example in which the terminal device and the network device are the execution bodies of the method.

**1001:** The network device skips sending first downlink transmission in a second time window.

In other words, the network device may implement DTX transmission.

**1002:** The network device sends second indication information to the terminal device. Correspondingly, the terminal device may receive the second indication information.

The second indication information indicates that the network device sends no first downlink transmission in the second time window, and the second indication information is carried in a second MAC CE or second DCI. Alternatively, it may be understood as that the second indication information indicates that the terminal device does not need to receive the first downlink transmission in the second time window.

**The following describes in detail related content of the second MAC CE carrying the second indication information.**

In a possible implementation, the second MAC CE is carried on a multicast or broadcast PDSCH. Because the multicast or broadcast PDSCH is sent to a group of terminal devices and is not user-specific (UE-specific), the second indication information is sent to the terminal devices through the multicast or broadcast PDSCH. This avoids a problem of high signaling overheads caused because the network device separately sends the second indication information to each terminal device, and reduces signaling overheads of the network device.

In a possible implementation, the second MAC CE may alternatively be carried on a unicast PDSCH.

In a possible implementation, the PDSCH carrying the second MAC CE may be an SPS PDSCH. The terminal device may receive the SPS PDSCH on a preset SPS PDSCH transmission occasion, and decode the SPS PDSCH, to obtain the second MAC CE. Because the SPS PDSCH occasion periodically appears, a relationship between the second time window and the SPS PDSCH transmission occasion may meet one or more of the following relationships:
(1) A periodicity length of the SPS PDSCH may be predefined as a duration of the second time window. In this way, the duration of the second time window does not need to be additionally configured.
(2) A start moment of the second time window may be predefined as a start moment or an end moment of a previous SPS PDSCH occasion. In this way, the start moment of the second time window does not need to be additionally configured.

The second MAC CE is carried on the SPS PDSCH, and the relationship between the SPS PDSCH transmission occasion and the second time window is predefined. This helps reduce indication overheads.

In a possible implementation, the PDSCH carrying the second MAC CE may be a dynamic scheduling PDSCH.

**The following describes in detail related content of the second DCI carrying the second indication information.**

In a possible implementation, the second DCI may be carried on a multicast or broadcast PDCCH. In other words, the second DCI may be multicast DCI or broadcast DCI. For the network device, in comparison with respectively sending corresponding second indication information to each terminal device, sending the second indication information by using the multicast DCI or the broadcast DCI helps reduce indication overheads.

In a possible implementation, the second DCI may alternatively be carried on a unicast PDCCH.

Based on that the second DCI is carried on the multicast or broadcast PDCCH or carried on the unicast PDCCH, the second DCI may further have one or more of the following designs:
Manner 1: One field is added to a DCI format in an existing protocol, to obtain the second DCI, where the added field is used to carry the second indication information.
Manner 2: A DCI format different from that in the existing protocol is designed, to obtain the first point DCI. In other words, the second DCI is different from the DCI format in the existing protocol. Compared with the DCI format in the existing protocol, the second DCI is a new DCI format.
Manner 3: The second DCI corresponds to a new RNTI, and the RNTI is used to scramble the second DCI. For example, the scrambling RNTI has a same value for a plurality of terminal devices, and the plurality of terminal devices can detect and decode the second DCI.

In this embodiment of this application, the terminal device may determine a position of the second time window based on two or three of an end moment of the second time window, the duration of the second time window, and the start moment of the second time window.

**The following separately describes the end moment of the second time window, the duration of the second time window, and the start moment of the second time window.**

### (1) End moment of the second time window

The end moment of the second time window is not later than a transmission moment *T*₁ of a first physical downlink channel carrying the second MAC CE or the second DCI. For example, the end moment of the second time window may be equivalent to the transmission moment *T*₁ of the first physical downlink channel. Alternatively, the end moment of the second time window is before the transmission moment *T*₁ of the first physical downlink channel. The transmission moment *T*₁ of the first physical downlink channel may be a transmission start moment of the first physical downlink channel or a transmission end moment of the first physical downlink channel.

It should be noted that the transmission moment *T*₁ in this application is a transmission moment understood by the network device and the terminal device in alignment. For example, for the network device, the transmission moment *T*₁ of the first physical downlink channel may be a sending moment of the first physical downlink channel. For the terminal device, the transmission moment *T*₁ of the first physical downlink channel may be a receiving moment of the first physical downlink channel.

For example, in FIG. 11, an example in which the end moment of the second time window is before the transmission moment *T*₁ of the first physical downlink channel is used. As shown in FIG. 11, if the network device finds, in the second time window, that a small amount of data needs to be transmitted, the network device may send the data together with subsequent data after a delay. Therefore, the network device determines not to send the first downlink transmission. After the second time window ends, the network device sends the second indication information to the terminal device, to notify the terminal device that the network device sends no first downlink transmission in the second time window before the transmission moment *T*₁ of the first physical downlink channel. Correspondingly, after receiving the second indication information, the terminal device determines that first downlink transmission received in the second time window before the transmission moment *T*₁ of the first physical downlink channel is invalid.

Because the end moment of the second time window is not earlier than the transmission moment *T*₁ of the first physical downlink channel carrying the second MAC CE or the second DCI, the following provides several optional manners for determining the start moment of the second time window:
Manner A: The end moment of the second time window is determined based on the transmission moment *T*₁ of the first physical downlink channel and a second time length Δ*T*2, and the second time length Δ*T*2 is preset or is indicated by the second indication information. The second time length Δ*T*2 is greater than 0. That the second time length Δ*T*2 is preset means that the second time length Δ*T*2 is pre-specified in a protocol. Alternatively, that the second time length Δ*T*2 is preset means that the second time length Δ*T*2 is configured by the network device by using RRC signaling. After the second time window, the network device needs a specific processing delay to prepare to send the second indication information. Therefore, the end moment of the second time window is determined based on the transmission moment *T*₁ of the first physical downlink channel and the second time length Δ*T*2, so that the end moment of the second time window is before the transmission moment *T*₁ of the first physical downlink channel, to better match sending processing overheads on the network device side.

Optionally, the end moment of the second time window is an end moment of a third time unit, the third time unit is a latest time unit whose end moment is not later than a moment *T*₃, and the moment *T*₃ = *T*₁ - Δ*T*2. According to the possible implementation, it is ensured that the second time window ends at an end moment of one time unit. This conforms to a feature that the network device and the terminal device perform transmission in a unit of time unit, and can reduce implementation complexity.

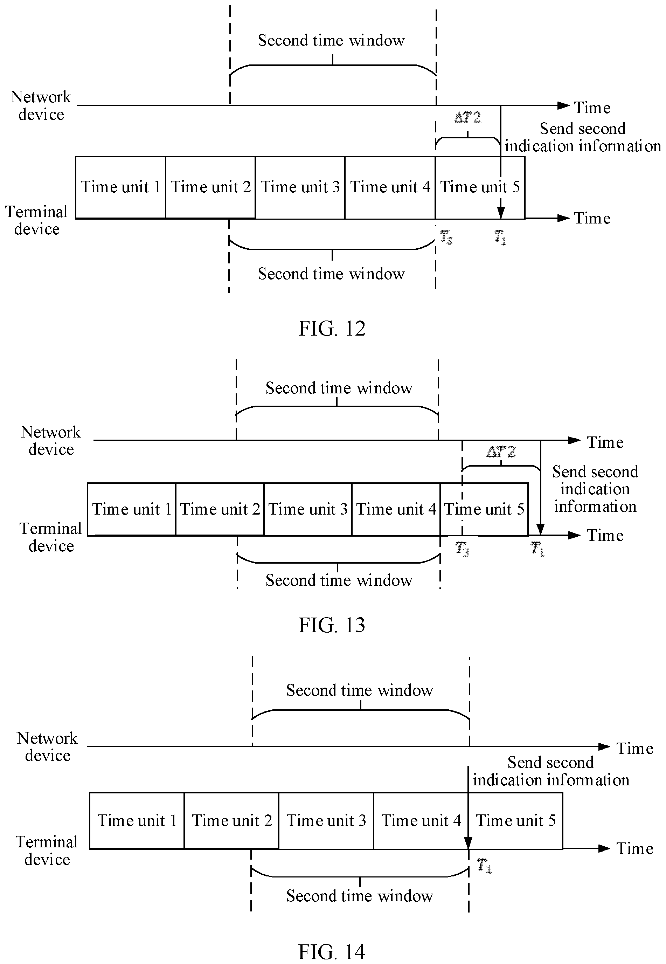

For example, the transmission moment *T*₁ of the first physical downlink channel, the second time length Δ*T*2, and the moment *T*₃ are shown in FIG. 12. An end moment of a time unit 4 is equivalent to the moment *T*₃. Because the time unit 4 is a latest time unit whose end moment is not later than the moment *T*₃, the third time unit is the time unit 4.

For another example, the transmission moment *T*₁ of the first physical downlink channel, the second time length Δ*T*2, and the moment *T*₃ are shown in FIG. 13. A start moment of a time unit 4 is earlier than the moment *T*₃. Because the time unit 4 is a latest time unit whose end moment is not later than the moment *T*₃, the third time unit is the time unit 4.

Manner B: The end moment of the second time window is determined based on the transmission moment *T*₁ of the first physical downlink channel. For example, the end moment of the second time window is an end moment of a fourth time unit, and the fourth time unit is a latest time unit whose end moment is not later than a moment *T*₁. According to the possible implementation, it is ensured that the second time window ends at an end moment of one time unit. This conforms to a feature that the network device and the terminal device perform transmission in a unit of time unit, and can reduce implementation complexity.

For example, the transmission moment *T*₁ of the first physical downlink channel is shown in FIG. 14. An end moment of a time unit 4 is equivalent to the transmission moment *T*₁ of the first physical downlink channel. Because the time unit 4 is a latest time unit whose end moment is not later than the transmission moment *T*₁ of the first physical downlink channel, the fourth time unit is the time unit 4.

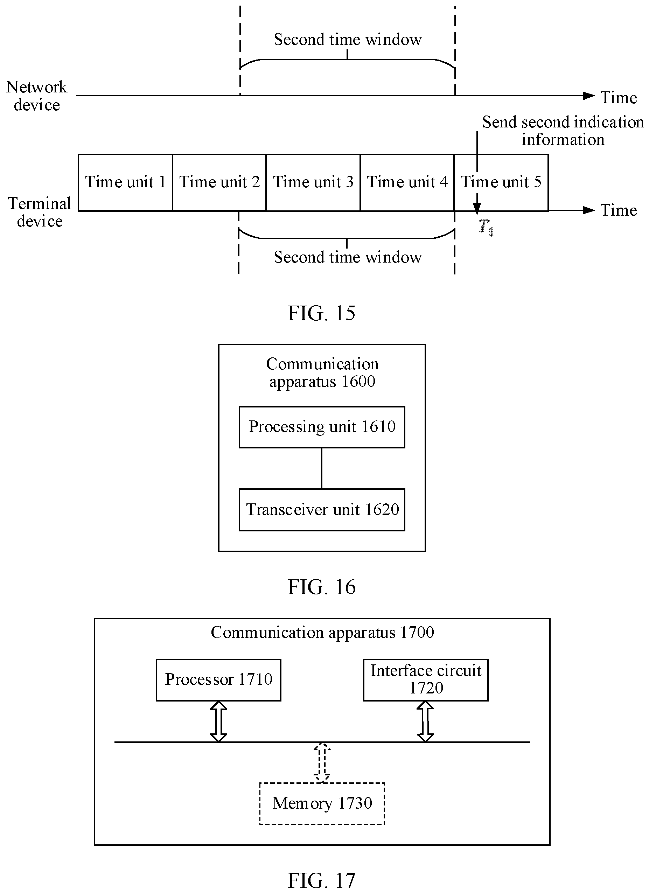

For another example, the transmission moment *T*₁ of the first physical downlink channel is shown in FIG. 15. A start moment of a time unit 4 is earlier than the transmission moment *T*₁ of the first physical downlink channel. Because the time unit 4 is a latest time unit whose end moment is not later than the transmission moment *T*₁ of the first physical downlink channel, the fourth time unit is the time unit 4.

Manner C: Alternatively, the end moment of the second time window may be directly indicated by the second indication information. This helps reduce a calculation amount of the terminal device and reduce power consumption of the terminal device.

### (2) Duration of the second time window

The duration of the second time window is preset or is indicated by the second indication information. That the duration of the second time window is preset means that the duration of the second time window is pre-specified in the protocol. Alternatively, that the duration of the second time window is preset means that the duration of the second time window is configured by the network device by using the RRC signaling.

The preset duration of the second time window helps reduce indication overheads of the duration of the second time window. The duration of the second time window is indicated by the second indication information, so that the duration of the second time window can be dynamically changed, and the duration of the second time window can be more flexible.

### (3) Start moment of the second time window

The start moment of the second time window is preset or is indicated by the second indication information. That the start moment of the second time window is preset means that the start moment of the second time window is pre-specified in the protocol. Alternatively, that the start moment of the second time window is preset means that the start moment of the second time window is configured by the network device by using the RRC signaling. For example, when the second indication information is carried in the second MAC CE and the second MAC CE is carried on the SPS PDSCH, the start moment of the second time window is a start moment or an end moment of a previous detection occasion of the SPS PDSCH carrying the second MAC CE. Alternatively, when the second indication information is carried in the second DCI, the start moment of the second time window is a start moment or an end moment of a previous detection occasion of the second DCI carrying the first indication information.

The preset start moment of the second time window helps reduce indication overheads of the end moment of the second time window. The start moment of the second time window is indicated by the second indication information. This helps reduce a calculation amount of the terminal device and reduce power consumption of the terminal device.

**1003:** The terminal device determines, based on the second indication information, that the network device sends no first downlink transmission in the second time window.

In this embodiment of this application, after determining the second time window, if the terminal receives no first downlink transmission in the second time window, the terminal does not perform processing. If the first downlink transmission is received, it is considered that the first downlink transmission is invalid, and first downlink transmission reception information and a measurement result are ignored.

For example, if the first downlink transmission includes a PDCCH, the terminal device determines that blind detection performed on the PDCCH in the second time window is invalid. The terminal device may ignore downlink transmission and uplink transmission scheduled by using DCI on the PDCCH in the second time window, and ignore measurement and reporting indicated by the DCI on the PDCCH.

For another example, if the first downlink transmission includes a dynamic scheduling PDSCH or an SPS PDSCH, the terminal device overwrites a buffered dynamic scheduling PDSCH or SPS PDSCH received in the second time window, and does not need to feed back a HARQ-ACK of the dynamic scheduling PDSCH or SPS PDSCH received in the second time window.

For another example, if the first downlink transmission includes a CSI-RS, the terminal device deletes measurement information of the CSI-RS in the second time window.

**The following describes in detail related content of the first downlink transmission.**

In a possible implementation, the first downlink transmission includes any one or more of the following: the PDCCH, the dynamic scheduling PDSCH, the SPS PDSCH, the CSI-RS, or an SSB. For example, the first downlink transmission includes the PDCCH, the dynamically configured PDSCH, the SPS PDSCH, the CSI-RS, and the SSB. In this way, the network device can dynamically shut down much downlink transmission. This helps reduce power consumption of the network device.

In a possible implementation, the first downlink transmission includes: the PDCCH, the dynamic scheduling PDSCH, the SPS PDSCH, and the CSI-RS, and the first downlink transmission does not include an SSB. For SSB transmission, a terminal device in a connected state needs to perform reception, and a terminal device in an idle state or an inactive state also needs to perform reception. However, the terminal device in the idle state or the inactive state may not successfully receive the second indication information. Therefore, reserving the SSB transmission in the second time window helps maintain SSB reception and measurement of the terminal device in the idle state or the inactive state, to avoid a measurement error caused because the network device does not send the SSB but the terminal device in the idle state or the inactive state attempts to detect the SSB, thereby avoiding an unnecessary operation such as cell reselection. In addition, SSB sending has a long periodicity and a small time domain proportion. Sending the SSB by the network device in the second time window does not cause large power consumption of the network device.

In a possible implementation, the first downlink does not include an SSB and a PDCCH scrambled by a P-RNTI. The PDCCH scrambled by the P-RNTI is used to schedule a paging indication of a user, and a position at which each user receives a PDCCH scrambled by a corresponding P-RNTI is preconfigured. If this time a base station skips a transmission occasion of the PDCCH scrambled by the P-RNTI, UE needs to wait for a pre-configuration occasion. A waiting delay is high. Therefore, reserving, in the second time window, transmission of the PDCCH scrambled by the P-RNTI helps maintain paging reception of the user.

Optionally, when the first downlink transmission includes the PDCCH, the PDCCH includes one or more of the following: a PDCCH scrambled by a C-RNTI, a PDCCH scrambled by a CS-RNTI, a PDCCH scrambled by an SFI-RNTI, a PDCCH scrambled by an INT-RNTI, a PDCCH scrambled by a CI-RNTI, a PDCCH scrambled by a TPC-PUCCH-RNTI, a PDCCH scrambled by a TPC-PUSCH-RNTI, a PDCCH scrambled by a TPC-SRS-RNTI, a PDCCH scrambled by an AI-RNTI, a PDCCH scrambled by an SI-RNTI, a PDCCH scrambled by an RA-RNTI, a PDCCH scrambled by a TC-RNTI, or a PDCCH scrambled by a P-RNTI.

In a possible implementation, the network device may further not receive first uplink transmission in the second time window. The second indication information further indicates that the network device receives no first uplink transmission in the second time window. Correspondingly, the terminal device may further determine, based on the second indication information, that first uplink transmission sent in the second time window is invalid. In other words, the terminal device considers that the first uplink transmission fails to be received on the network device side. According to the possible implementation, the network device may not only shut down sending of the first downlink transmission, but also shut down receiving of the first uplink transmission and signal processing corresponding to the first uplink transmission, to further reduce the power consumption of the network device.

In a possible implementation, the first uplink transmission may include any one or more of the following: a GB PUSCH, a CG PUSCH, a PUCCH, a PRACH, or an SRS.

In a possible implementation, if the first uplink transmission includes the GB PUSCH, the terminal device does not consider that the GB PUSCH needs to be sent in the second time window. In other words, the terminal device does not expect the GB PUSCH to exist in the second time window.

Optionally, when the first uplink transmission includes the PUCCH, the PUCCH may include one or more of the following: a PUCCH carrying the HARQ-ACK of the dynamic scheduling PDSCH, a PUCCH carrying the HARQ-ACK of the SPS PDSCH, a PUCCH carrying CSI, or a PUCCH carrying an SR or BFR.

The second indication information may indicate, in an explicit indication manner or an implicit indication manner, that the network device sends no first downlink transmission in the second time window.

### (1) Explicit indication manner

In a possible implementation, the second indication information is an information bit, and different status values of the information bit indicate different information. A first status value of the second indication information indicates that the network device sends no first downlink transmission in the second time window, and a second status value of the second indication information indicates that the network device sends the first downlink transmission in the second time window.

For example, the second indication information is a 1-bit information bit. When a status value of the bit of 1 is 1, it indicates that the network device sends no first downlink transmission in the second time window. When a status value of the bit of 1 is 0, it indicates that the network device sends the first downlink transmission in the second time window. Alternatively, when a status value of the bit of 1 is 0, it indicates that the network device sends no first downlink transmission in the second time window. When a status value of the bit of 1 is 1, it indicates that the network device sends the first downlink transmission in the second time window.

For another example, the second indication information is a 2-bit information bit. When a status value of the bit of 2 is 11, it indicates that the network device sends no first downlink transmission in the second time window. When a status value of the bit of 2 is 00, it indicates that the network device sends the first downlink transmission in the second time window. Alternatively, when a status value of the bit of 2 is 00, it indicates that the network device sends no first downlink transmission in the second time window. When a status value of the bit of 2 is 11, it indicates that the network device sends the first downlink transmission in the second time window.

In a possible implementation, if the terminal device fails to decode the first physical downlink channel carrying the second MAC CE or the second DCI, the terminal device determines that a value of the second indication information is the second status value. According to the possible implementation, the terminal device is prevented from determining valid transmission in the second time window as invalid transmission.

In a possible implementation, if the terminal device fails to decode the first physical downlink channel carrying the second MAC CE or the second DCI, the terminal device determines that a value of the second indication information is the first status value. According to the possible implementation, the terminal device is prevented from determining valid transmission in the second time window as invalid transmission.

In a possible implementation, if the terminal device fails to decode the first physical downlink channel carrying the second MAC CE or the second DCI, the terminal device determines, based on the RRC signaling sent by the network device, that a value of the second indication information is the first status value or the second status value. According to the possible implementation, the value of the second indication information can be flexibly determined.

### (2) Implicit indication manner

The terminal device determines, by detecting whether the second indication information exists in the second MAC CE or the second DCI, whether the network device sends the first downlink transmission in the second time window. In a possible implementation, "existence" of the second indication information indicates that the network device sends no first downlink transmission in the second time window, that is, the first downlink transmission becomes invalid, and "no existence" of the second indication information indicates that the network device sends the first downlink transmission in the second time window. Alternatively, "no existence" of the second indication information indicates that the network device sends no first downlink transmission in the second time window, that is, the first downlink transmission becomes invalid, and "existence" of the second indication information indicates that the network device sends the first downlink transmission in the second time window.

That the second indication information is carried in the second MAC CE is used as an example. When the second MAC CE is carried on the SPS PDSCH, the terminal device receives the SPS PDSCH at a preset time-frequency position, decodes the SPS PDSCH, and queries, after the decoding, a MAC CE included in the data block. If the second MAC CE is included, that is, the second indication information "exists", the terminal device does not need to receive the first downlink transmission in the second time window, that is, the first downlink transmission becomes invalid. When the data block does not include the second MAC CE, that is, the second indication information "does not exist", the terminal device needs to receive the first downlink transmission in the second time window.

In a possible implementation, if the terminal device fails to decode the first physical downlink channel carrying the second MAC CE or the second DCI, the terminal device determines that the second indication information does not exist. According to the possible implementation, the terminal device is prevented from determining valid transmission in the second time window as invalid transmission.

In a possible implementation, if the terminal device fails to decode the first physical downlink channel carrying the second MAC CE or the second DCI, the terminal device determines that the second indication information exists. According to the possible implementation, the terminal device is prevented from determining valid transmission in the second time window as invalid transmission.

In a possible implementation, if the terminal device fails to decode the first physical downlink channel carrying the second MAC CE or the second DCI, the terminal device determines, based on the RRC signaling sent by the network device, whether the second indication information exists. According to the possible implementation, whether the second indication information exists can be flexibly determined.

In a possible implementation, that the network device does not send the first downlink transmission in the second time window may alternatively be understood as that the network device is in an inactive state in the second time window. That the network device sends the first downlink transmission in the second time window may alternatively be understood as that the network device is in an active state in the second time window. That the second indication information indicates that the network device sends no first downlink transmission in the second time window may alternatively be understood as that the second indication information indicates that the network device is in an inactive state in the second time window. That the second indication information indicates that the network device sends the first downlink transmission in the second time window may alternatively be understood as that the second indication information indicates that the network device is in an active state in the second time window.

Optionally, the network device may send the first downlink transmission and/or receive the first uplink transmission on an available time-frequency resource after the second time window ends, and the terminal device may re-receive the first downlink transmission and/or send the first uplink transmission on an available time-frequency resource after the second time window ends. According to the possible implementation, energy saving of the network device can be implemented without sacrificing data transmission.

In a possible implementation, if the terminal device fails to decode the first physical downlink channel carrying the second MAC CE or the second DCI, the terminal device determines that the network device sends the first downlink transmission in the second time window, that is, the terminal device determines that the first downlink transmission received in the second time window is valid. According to the possible implementation, the terminal device is prevented from determining valid transmission in the second time window as invalid transmission.

In a possible implementation, if the terminal device fails to decode the first physical downlink channel carrying the second MAC CE or the second DCI, the terminal device determines that the network device sends no first downlink transmission in the second time window, that is, the terminal device determines that the first downlink transmission received in the second time window is invalid. According to the possible implementation, the terminal device is prevented from determining invalid transmission in the second time window as valid transmission.

In a possible implementation, if the terminal device fails to decode the first physical downlink channel carrying the second MAC CE or the second DCI, the terminal device determines, based on radio resource control RRC signaling sent by the network device, whether the network device sends the first downlink transmission in the second time window. According to the possible implementation, when the terminal device fails to decode the first physical downlink channel carrying the second MAC CE or the second DCI, the terminal device may flexibly determine that the network device sends no first downlink transmission in the second time window.

It can be learned that through implementation of the method described in FIG. 10, the network device can dynamically indicate, by using the MAC CE and the DCI, whether the network device sends the first downlink transmission in the second time window, so that the network device side can more flexibly shut down the downlink transmission. This helps reduce a performance loss of the terminal device. In addition, the first downlink transmission is first shut down, and then that the network device shuts down the first downlink transmission is indicated to the terminal device, so that the network device does not need to predict a transmission amount of the first downlink transmission in subsequent time to determine whether to shut down the first downlink transmission. This helps reduce the power consumption of the network device, and improves flexibility of sending the downlink transmission or being silent on the downlink transmission by the network device.

It may be understood that, to implement functions in the foregoing embodiments, the network device and the terminal device include corresponding hardware structures and/or software modules for performing the functions. A person skilled in the art should be easily aware that, in combination with examples of units and method steps described in embodiments disclosed in this application, this application can be implemented by hardware or a combination of hardware and computer software. Whether a function is performed by hardware or hardware driven by computer software depends on a particular application scenario and a design constraint condition of the technical solutions.

FIG. 16 and FIG. 17 each are a schematic of a structure of a possible communication apparatus according to an embodiment of this application. The communication apparatuses may be configured to implement functions of the terminal device or the network device in the foregoing method embodiments, and therefore can also implement beneficial effects of the foregoing method embodiments. In embodiments of this application, the communication apparatus may be one of the terminal devices 120a to 120j shown in FIG. 2, may be the network device 110a or 110b shown in FIG. 2, or may be a module (for example, a chip) used in the terminal device or the network device.

As shown in FIG. 16, the communication apparatus 1600 includes a processing unit 1610 and a transceiver unit 1620.

In a possible implementation, the communication apparatus 1600 is configured to implement a function of the terminal device or the network device in the method embodiment shown in FIG. 4.

When the communication apparatus 1600 is configured to implement the function of the terminal device in the method embodiment shown in FIG. 4, the transceiver unit 1620 is configured to receive first indication information, where the first indication information indicates the terminal device not to receive first downlink transmission in a first time window, and the first indication information is carried in a first MAC CE or first DCI; and the processing unit 1610 is configured to skip receiving the first downlink transmission in the first time window based on the first indication information.

When the communication apparatus 1600 is configured to implement the function of the network device in the method embodiment shown in FIG. 4, the transceiver unit 1620 is configured to send first indication information to the terminal device, where the first indication information indicates the terminal device not to receive first downlink transmission in a first time window, and the first indication information is carried in first MAC CE signaling or first DCI signaling.

For more detailed descriptions of the processing unit 1610 and the transceiver unit 1620, directly refer to related descriptions of the method embodiment shown in FIG. 4. Details are not described herein.

In another possible implementation, the communication apparatus 1600 is configured to implement a function of the terminal device or the network device in the method embodiment shown in FIG. 10.

When the communication apparatus 1600 is configured to implement the function of the terminal device in the method embodiment shown in FIG. 10, the transceiver unit 1620 is configured to receive second indication information, where the second indication information indicates that the network device sends no first downlink transmission in a second time window, the second indication information is carried in a first MAC CE or first DCI, and an end moment of the second time window is not later than a transmission moment *T*₁ of a first physical downlink channel carrying a second MAC CE or second DCI; and the processing unit 1610 is configured to determine, based on the second indication information, that first downlink transmission received in the second time window is invalid.

When the communication apparatus 1600 is configured to implement the function of the network device in the method embodiment shown in FIG. 10, the processing unit 1610 is configured to skip sending first downlink transmission in a second time window; and the transceiver unit 1620 is configured to send second indication information to the terminal device, where the second indication information indicates that the network device sends no first downlink transmission in the second time window, the second indication information is carried in first MAC CE signaling or first DCI signaling, and an end moment of the second time window is not later than a transmission moment *T*₁ of a first physical downlink channel carrying a second MAC CE or second DCI.

For more detailed descriptions of the processing unit 1610 and the transceiver unit 1620, directly refer to related descriptions of the method embodiment shown in FIG. 10. Details are not described herein.

As shown in FIG. 17, the communication apparatus 1700 includes a processor 1710 and an interface circuit 1720. The processor 1710 and the interface circuit 1720 are coupled to each other. It may be understood that the interface circuit 1720 may be a transceiver or an input/output interface. Optionally, the communication apparatus 1700 may further include a memory 1730, configured to: store instructions executed by the processor 1710, store input data needed by the processor 1710 to run instructions, or store data generated by running instructions by the processor 1710.

When the communication apparatus 1700 is configured to implement the method shown in FIG. 4 or FIG. 10, the processor 1710 is configured to implement a function of the processing unit 1610, and the interface circuit 1720 is configured to implement a function of the transceiver unit 1620.

When the communication apparatus is the chip used in the terminal device, the chip in the terminal device implements functions of the terminal device in the foregoing method embodiments. The chip in the terminal device receives information from another module (for example, a radio frequency module or an antenna) in the terminal device, where the information is sent by the network device to the terminal device. Alternatively, the chip in the terminal device sends information to another module (for example, a radio frequency module or an antenna) in the terminal device, where the information is sent by the terminal device to the network device.

When the communication apparatus is the module used in the network device, the module in the network device implements functions of the network device in the foregoing method embodiments. The module in the network device receives information from another module (for example, a radio frequency module or an antenna) in the network device, where the information is sent by the terminal device to the network device. Alternatively, the module in the network device sends information to another module (for example, a radio frequency module or an antenna) in the network device, where the information is sent by the network device to the terminal device. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor, or may be any conventional processor.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in the network device or the terminal device as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

## Claims

1. A transmission indication method, wherein the method comprises:
receiving, by a terminal device, first indication information, wherein the first indication information indicates the terminal device not to receive first downlink transmission in a first time window, and the first indication information is carried in a first medium access control-control element MAC CE or first downlink control information DCI; and
skipping, by the terminal device, receiving the first downlink transmission in the first time window based on the first indication information.

2. The method according to claim 1, wherein the first MAC CE or the first DCI is carried on a multicast or broadcast physical downlink channel.

3. The method according to claim 1 or 2, wherein a start moment of the first time window is determined based on a transmission moment *T*₁ of a first physical downlink channel and a first time length Δ*T*1, the first physical downlink channel is a physical downlink channel carrying the first MAC CE or the first DCI, and the first time length Δ*T*1 is preset or is indicated by the first indication information.

4. The method according to claim 3, wherein the start moment of the first time window is a start moment of a first time unit, the first time unit is an earliest time unit whose start moment is not earlier than a moment *T*₂, and the moment *T*₂ = *T*₁ + Δ*T*1.

5. The method according to claim 3 or 4, wherein the first time length Δ*T*1 is greater than or equal to a first threshold, and the first threshold is a shortest processing duration supported by the terminal device for the first physical downlink channel.

6. The method according to any one of claims 1 to 5, wherein a duration of the first time window is preset or is indicated by the first indication information.

7. The method according to any one of claims 1 to 6, wherein the first downlink transmission comprises any one or more of the following: a physical downlink control channel PDCCH, a dynamic scheduling physical downlink shared channel PDSCH, a semi-persistent scheduling physical downlink shared channel SPS PDSCH, a channel state information reference signal CSI-RS, or a synchronization signal/physical broadcast channel block SSB.

8. The method according to any one of claims 1 to 6, wherein the first downlink transmission comprises: a physical downlink control channel PDCCH, a dynamic scheduling physical downlink shared channel PDSCH, a semi-persistent scheduling physical downlink shared channel SPS PDSCH, and a channel state information reference signal CSI-RS, and the first downlink transmission does not comprise a synchronization signal/physical broadcast channel block SSB.

9. The method according to any one of claims 1 to 8, wherein
a first status value of the first indication information indicates the terminal device not to receive the first downlink transmission in the first time window; and
a second status value of the first indication information indicates the terminal device to receive the first downlink transmission in the first time window.

10. The method according to any one of claims 1 to 9, wherein the method further comprises:
if the terminal device fails to decode the first physical downlink channel carrying the first MAC CE or the first DCI, receiving, by the terminal device, the first downlink transmission in the first time window;
if the terminal device fails to decode the first physical downlink channel carrying the first MAC CE or the first DCI, skipping, by the terminal device, receiving the first downlink transmission in the first time window; or
if the terminal device fails to decode the first physical downlink channel carrying the first MAC CE or the first DCI, determining, by the terminal device based on radio resource control RRC signaling sent by a network device, whether to receive the first downlink transmission in the first time window.

11. A transmission indication method, wherein the method comprises:
sending, by a network device, first indication information to a terminal device, wherein the first indication information indicates the terminal device not to receive first downlink transmission in a first time window, and the first indication information is carried in first medium access control-control element MAC CE signaling or first downlink control information DCI signaling; and
skipping, by the network device, sending the first downlink transmission in the first time window.

12. The method according to claim 11, wherein the first MAC CE or the first DCI is carried on a multicast or broadcast physical downlink channel.

13. The method according to claim 11 or 12, wherein a start moment of the first time window is a start moment of a first time unit, the first time unit is an earliest time unit whose start moment is not earlier than a moment *T*₂, and the moment *T*₂ = *T*₁ + Δ*T*1, wherein
*T*₁ is a transmission moment of a first physical downlink channel, Δ*T*1 is a first time length, the first physical downlink channel is a physical downlink channel carrying the first MAC CE or the first DCI, and the first time length Δ*T*1 is preset, or the first indication information further indicates the first time length Δ*T*1.

14. The method according to claim 13, wherein the first time length Δ*T*1 is greater than or equal to a first threshold, and the first threshold is a shortest processing duration that can be supported by the terminal device for the first physical downlink channel.

15. The method according to any one of claims 11 to 14, wherein a duration of the first time window is preset, or the first indication information further indicates a duration of the first time window.

16. The method according to any one of claims 11 to 15, wherein the first downlink transmission comprises any one or more of the following: a physical downlink control channel PDCCH, a dynamic scheduling physical downlink shared channel PDSCH, a semi-persistent scheduling physical downlink shared channel SPS PDSCH, a channel state information reference signal CSI-RS, or a synchronization signal/physical broadcast channel block SSB.

17. The method according to any one of claims 11 to 15, wherein the first downlink transmission comprises: a physical downlink control channel PDCCH, a dynamic scheduling physical downlink shared channel PDSCH, a semi-persistent scheduling physical downlink shared channel SPS PDSCH, and a channel state information reference signal CSI-RS, and the first downlink transmission does not comprise a synchronization signal/physical broadcast channel block SSB.

18. The method according to any one of claims 11 to 17, wherein
a first status value of the first indication information indicates the terminal device not to receive the first downlink transmission in the first time window; and
a second status value of the first indication information indicates the terminal device to receive the first downlink transmission in the first time window.

19. A communication apparatus, wherein the communication apparatus comprises:
a transceiver unit, configured to receive first indication information, wherein the first indication information indicates the communication apparatus not to receive first downlink transmission in a first time window, and the first indication information is carried in a first medium access control-control element MAC CE or first downlink control information DCI; and
a processing unit, configured to skip receiving the first downlink transmission in the first time window based on the first indication information.

20. The communication apparatus according to claim 19, wherein the first MAC CE or the first DCI is carried on a multicast or broadcast physical downlink channel.

21. The communication apparatus according to claim 19 or 20, wherein a start moment of the first time window is determined based on a transmission moment *T*₁ of a first physical downlink channel and a first time length Δ*T*1, the first physical downlink channel is a physical downlink channel carrying the first MAC CE or the first DCI, and the first time length Δ*T*1 is preset or is indicated by the first indication information.

22. The communication apparatus according to claim 21, wherein the start moment of the first time window is a start moment of a first time unit, the first time unit is an earliest time unit whose start moment is not earlier than a moment *T*₂, and the moment *T*₂ = *T*₁ + Δ*T*1.

23. The communication apparatus according to claim 21 or 22, wherein the first time length Δ*T*1 is greater than or equal to a first threshold, and the first threshold is a shortest processing duration supported by the communication apparatus for the first physical downlink channel.

24. The communication apparatus according to any one of claims 19 to 23, wherein a duration of the first time window is preset or is indicated by the first indication information.

25. The communication apparatus according to any one of claims 19 to 24, wherein the first downlink transmission comprises any one or more of the following: a physical downlink control channel PDCCH, a dynamic scheduling physical downlink shared channel PDSCH, a semi-persistent scheduling physical downlink shared channel SPS PDSCH, a channel state information reference signal CSI-RS, or a synchronization signal/physical broadcast channel block SSB.

26. The communication apparatus according to any one of claims 19 to 24, wherein the first downlink transmission comprises: a physical downlink control channel PDCCH, a dynamic scheduling physical downlink shared channel PDSCH, a semi-persistent scheduling physical downlink shared channel SPS PDSCH, and a channel state information reference signal CSI-RS, and the first downlink transmission does not comprise a synchronization signal/physical broadcast channel block SSB.

27. The communication apparatus according to any one of claims 19 to 26, wherein
a first status value of the first indication information indicates the communication apparatus not to receive the first downlink transmission in the first time window; and
a second status value of the first indication information indicates the communication apparatus to receive the first downlink transmission in the first time window.

28. The communication apparatus according to any one of claims 19 to 27, wherein
the transceiver unit is further configured to: if the first physical downlink channel carrying the first MAC CE or the first DCI fails to be decoded, receive the first downlink transmission in the first time window;
the transceiver unit is further configured to: if the first physical downlink channel carrying the first MAC CE or the first DCI fails to be decoded, skip receiving the first downlink transmission in the first time window; or
the transceiver unit is further configured to: if the first physical downlink channel carrying the first MAC CE or the first DCI fails to be decoded, determine, based on radio resource control RRC signaling sent by a network device, whether to receive the first downlink transmission in the first time window.

29. A communication apparatus, wherein the communication apparatus comprises:
a transceiver unit, configured to send first indication information to a terminal device, wherein the first indication information indicates the terminal device not to receive first downlink transmission in a first time window, and the first indication information is carried in first medium access control-control element MAC CE signaling or first downlink control information DCI signaling, wherein
the transceiver unit is further configured to skip sending the first downlink transmission in the first time window.

30. The communication apparatus according to claim 29, wherein the first MAC CE or the first DCI is carried on a multicast or broadcast physical downlink channel.

31. The communication apparatus according to claim 29 or 30, wherein a start moment of the first time window is a start moment of a first time unit, the first time unit is an earliest time unit whose start moment is not earlier than a moment *T*₂. and the moment *T*₂ = *T*₁ + Δ*T*1, wherein
*T*₁ is a transmission moment of a first physical downlink channel, Δ*T*1 is a first time length, the first physical downlink channel is a physical downlink channel carrying the first MAC CE or the first DCI, and the first time length Δ*T*1 is preset, or the first indication information further indicates the first time length Δ*T*1.

32. The communication apparatus according to claim 31, wherein the first time length Δ*T*1 is greater than or equal to a first threshold, and the first threshold is a shortest processing duration that can be supported by the terminal device for the first physical downlink channel.

33. The communication apparatus according to any one of claims 29 to 32, wherein a duration of the first time window is preset, or the first indication information further indicates a duration of the first time window.

34. The communication apparatus according to any one of claims 29 to 33, wherein the first downlink transmission comprises any one or more of the following: a physical downlink control channel PDCCH, a dynamic scheduling physical downlink shared channel PDSCH, a semi-persistent scheduling physical downlink shared channel SPS PDSCH, a channel state information reference signal CSI-RS, or a synchronization signal/physical broadcast channel block SSB.

35. The communication apparatus according to any one of claims 29 to 33, wherein the first downlink transmission comprises: a physical downlink control channel PDCCH, a dynamic scheduling physical downlink shared channel PDSCH, a semi-persistent scheduling physical downlink shared channel SPS PDSCH, and a channel state information reference signal CSI-RS, and the first downlink transmission does not comprise a synchronization signal/physical broadcast channel block SSB.

36. The communication apparatus according to any one of claims 29 to 35, wherein
a first status value of the first indication information indicates the terminal device not to receive the first downlink transmission in the first time window; and
a second status value of the first indication information indicates the terminal device to receive the first downlink transmission in the first time window.

37. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 10 by using a logic circuit or by executing code instructions, or the processor is configured to implement the method according to any one of claims 11 to 18 by using a logic circuit or by executing code instructions.

38. A chip system, wherein the chip system comprises a processor and an interface, the processor is coupled to the interface, the interface is configured to receive or output a signal, and the processor is configured to execute code instructions, to perform the method according to any one of claims 1 to 10 or the method according to any one of claims 11 to 18.

39. A communication system, wherein the communication system comprises a terminal device and a network device, the terminal device is configured to perform the method according to any one of claims 1 to 10, and the network device is configured to perform the method according to any one of claims 11 to 18.

40. A computer-readable storage medium, wherein the storage medium stores a computer program or instructions, and when the computer program or the instructions are executed by a communication apparatus, the method according to any one of claims 1 to 10 or the method according to any one of claims 11 to 18 is implemented.

41. A computer program product, wherein the computer program product comprises instructions, and when the instructions are executed, the method according to any one of claims 1 to 10 or the method according to any one of claims 11 to 18 is implemented.
